# EUROPEAN PATENT APPLICATION

(11) **EP 4 360 730 A1**
(43) Date of publication of application: **01.05.2024**
(21) Application number: 22828297.6
(22) Date of filing: 15.06.2022
(51) Int. Cl.: B01D 5/00, B01D 53/04, B01D 53/44

(54) **ORGANIC SOLVENT RECOVERY SYSTEM**

(30) Priority: 23.06.2021 JP 2021104017
(71) Applicant: TOYOBO MC Corporation, Osaka 530-0001 (JP)
(72) Inventor: KOHNO, Daiki, Osaka-shi, Osaka 530-0001 (JP)
(74) Representative: Vossius & Partner Patentanwälte Rechtsanwälte mbB
(86) International application number: PCT/JP2022/023971
(87) International publication number: WO 2022/270380

(57) **Abstract**

An organic solvent recovery system (1E) includes cooling condensing devices (100), a first flow passage (F1), first concentration devices (200), a second flow passage (F2), and a second concentration device (300). The number of the first concentration devices (200) provided is at least two or more, the number of the second concentration devices (300) provided is at least one or more, and the number of the concentration devices (300) is less than the number of the first concentration devices (200).

## Description

### TECHNICAL FIELD

The present disclosure relates to an organic solvent recovery system.

### BACKGROUND ART

A conventional known processing system that recovers an organic solvent from exhaust gas containing the organic solvent includes a combination of a cooling condensing device and a concentration device using an adsorption element. The cooling condensing device recovers and condenses the organic solvent and reduces the concentration of the organic solvent in the exhaust gas. The concentration device using the adsorption element brings the exhaust gas with the reduced concentration of the organic solvent discharged from the cooling condensing device into contact with the adsorption element, causes the adsorption element to adsorb the organic solvent, and thereby further reduces the concentration of the organic solvent in the exhaust gas, and the concentration device blows high-temperature gas onto an adsorption material that has adsorbed the organic solvent, causes the organic solvent to be desorbed therefrom, and discharges it as desorption gas containing the organic solvent at a high concentration. The desorption gas is returned to the cooling condensing device and is treated again (see PTLs 1 and 2).

### CITATION LIST

### PATENT LITERATURE

PTL 1: Japanese Patent Laying-Open No. 2016-101553
PTL 2: Japanese Patent Laying-Open No. 2017-991

### SUMMARY OF INVENTION

### TECHNICAL PROBLEM

In production facilities, constant amounts of clean gas is replenished. Therefore, exhaust gas corresponding to the replenished gas is discharged to external environments. In recent years, removal of organic solvents to very low concentration has been required with worldwide emission control, and high processing efficiency has been required.

An object of the present disclosure is to provide an organic solvent recovery system capable of recovering an organic solvent from exhaust gas at higher efficiency.

### SOLUTION TO PROBLEM

An organic solvent recovery system according to the present disclosure is an organic solvent recovery system that recovers an organic solvent from exhaust gas discharged from a production facility and containing the organic solvent. The organic solvent recovery system includes: cooling condensing devices that liquefy and condense the organic solvent by cooling the exhaust gas containing the organic solvent and discharge the exhaust gas as cooling treatment gas with reduced concentration of the organic solvent; a first flow passage that causes the cooling treatment gas to pass therethrough; first concentration devices that adsorb, by first adsorption elements, the organic solvent contained in the cooling treatment gas introduced from the first flow passage, discharge the cooling treatment gas as first treatment gas with further reduced concentration of the organic solvent, introduce high-temperature gas, desorb the organic solvent from the first adsorption elements, and discharge the high-temperature gas as first desorption gas; a second flow passage that causes a part of the first treatment gas to pass therethrough; and a second concentration device that adsorbs, by a second adsorption element, the organic solvent contained in the first treatment gas introduced from the second flow passage, discharges the first treatment gas as second treatment gas with further reduced concentration of the organic solvent, introduces high-temperature gas, desorbs the organic solvent from the second adsorption element, and discharges the high-temperature gas as second desorption gas. The number of the first concentration devices provided is at least two or more, the number of the second concentration devices provided is at least one or more, and the number of the second concentration devices is less than the number of the first concentration devices.

In the organic solvent recovery system, the plurality of first concentration devices are arranged in parallel with respect to the production facility.

In the organic solvent recovery system, the number of the cooling condensing devices provided is at least two or more, and the number of the first concentration devices is the same as the number of the cooling condensing devices.

In the organic solvent recovery system, the cooling condensing devices further include a net-like structure that separates the condensed organic solvent and the cooling treatment gas by bringing the exhaust gas after the cooling into contact with the net-like structure and a chamber that is caused to store the cooling treatment gas after passing through the net-like structure for a specific period of time.

In the organic solvent recovery system, the cooling condensing devices further include a heat exchanger that performs the cooling through heat exchange with a refrigerant.

In the organic solvent recovery system, in the first concentration devices, the plurality of first adsorption elements are arranged in a circumferential direction around a cylinder shaft of a rotor with a hollow columnar shape rotating about the cylinder shaft.

In the organic solvent recovery system, in the second concentration device, the second adsorption element is arranged at an adsorption rotor with a disc shape rotating about a cylinder shaft thereof.

### ADVANTAGEOUS EFFECT OF INVENTION

According to the present disclosure, it is possible to provide an organic solvent recovery system capable of recovering an organic solvent from exhaust gas at high efficiency.

### BRIEF DESCRIPTION OF DRAWINGS

Fig. 1 is a diagram schematically illustrating a configuration of an organic solvent recovery system according to an embodiment 1A.
Fig. 2 is an example of another configuration diagram of the organic solvent recovery system according to embodiment 1A.
Fig. 3 is an example of yet another configuration diagram of the organic solvent recovery system according to embodiment 1A.
Fig. 4 is a diagram schematically illustrating a configuration of an organic solvent recovery system according to an embodiment 1B.
Fig. 5 is a diagram schematically illustrating a configuration of an organic solvent recovery system according to an embodiment 2B.
Fig. 6 is a diagram schematically illustrating a configuration of an organic solvent recovery system according to an embodiment 1C.
Fig. 7 is a diagram schematically illustrating a configuration of an organic solvent recovery system according to an embodiment 2C.
Fig. 8 is a diagram schematically illustrating a configuration of an organic solvent recovery system according to an embodiment 3C.
Fig. 9 is a diagram schematically illustrating a configuration of an organic solvent recovery system according to an embodiment 4C.
Fig. 10 is a diagram schematically illustrating a configuration of an organic solvent recovery system according to an embodiment 1D.
Fig. 11 is a diagram schematically illustrating a configuration of an organic solvent recovery system according to an embodiment 2D.
Fig. 12 is a diagram schematically illustrating a configuration of an organic solvent recovery system according to an embodiment 3D.
Fig. 13 is a diagram schematically illustrating a configuration of an organic solvent recovery system according to an embodiment 4D.
Fig. 14 is a diagram schematically illustrating a configuration of an organic solvent recovery system according to an embodiment 1E.
Fig. 15 is a diagram schematically illustrating a configuration of an organic solvent recovery system according to an embodiment 2E.
Fig. 16 is a diagram schematically illustrating the configuration of the organic solvent recovery system according to embodiment 2E.
Fig. 17 is a diagram schematically illustrating a configuration of an organic solvent recovery system according to an embodiment 1J.

### DESCRIPTION OF EMBODIMENTS

An organic solvent recovery system according to each embodiment based on the present disclosure will be described below with reference to the drawings. In a case where the numbers, the amounts, and the like are referred to in the embodiments described below, the scope of the present disclosure is not necessarily limited to the numbers, the amounts, and the like unless otherwise particularly stated. The same components or corresponding components will be denoted with the same reference signs, and overlapping description may not be repeated. Using configurations in the embodiments in appropriate combinations is expected from the beginning.

### [Embodiment 1A]

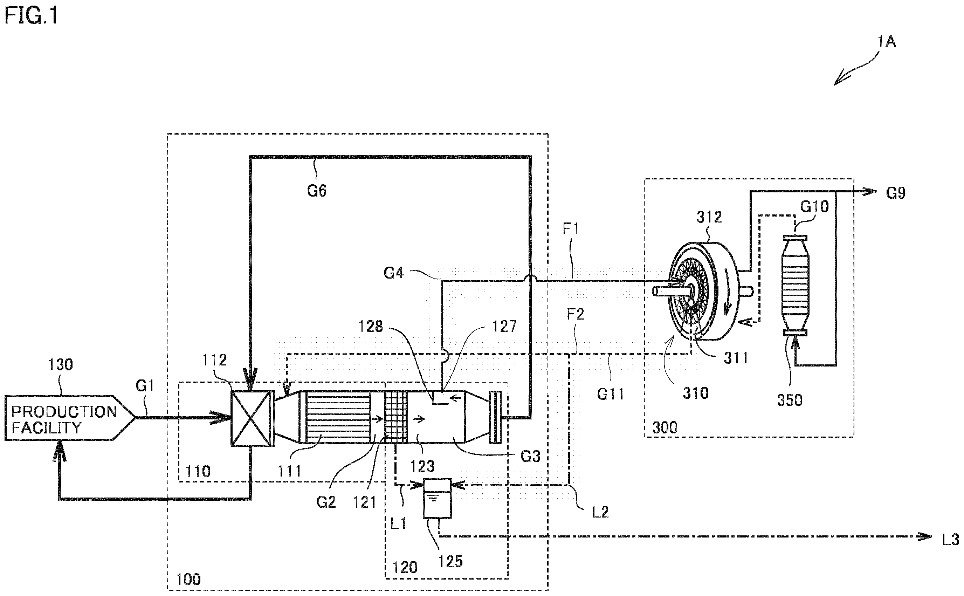

Fig. 1 is a diagram schematically illustrating a configuration of an organic solvent recovery system 1A according to an embodiment 1A. Organic solvent recovery system 1A is configured of a cooling condensing device 100, a concentration device 300, a first flow passage F1, and a second flow passage F2.

Cooling condensing device 100 includes a cooling section 110, a separating section 120, and a chamber 123. Exhaust gas G1 containing an organic solvent is cooled by passing through cooling section 110, and along with this, the organic solvent is liquefied and condensed. Next, exhaust gas G2 is separated into a cooled condensed liquid L1 that has been liquefied and condensed and cooling treatment gas G3 with reduced concentration of the organic solvent. Finally, a part (adsorption inlet gas) G4 of the cooling treatment gas is dispensed to be supplied to concentration device 300 through chamber 123 and is then discharged from cooling condensing device 100.

Although cooling means/a configuration of cooling section 110 are not particularly limited, there is a first heat exchange 111 that performs cooling through indirect heat exchange between a refrigerant such as cooling water, cool water, or brine and the exhaust gas. Conditions such as a cooling temperature may be appropriately determined depending on the organic solvent as a target of recovery.

Also, cooling section 110 may be provided with a second heat exchanger 112 that cools exhaust gas G1 through heat exchange between a remaining part (return gas) G6 of the cooling treatment gas and exhaust gas G1 before first heat exchanger 111. This is because the heat transmission area and the amount of refrigerant required by first heat exchanger 111 are reduced.

Although separating means/a configuration of separating section 120 is not particularly limited, there is a net-like structure 121 that brings liquid droplets, such as a demister, a filter, or a mesh, into contact therewith and captures the liquid droplets. Cooled condensed liquid L1 captured by net-like structure 121 is collected in a tank 125 arranged below net-like structure 121 due to the gravity and is recovered as a recovered liquid L3.

Chamber 123 is a structure having a space with a specific capacity.

Dispensing into part (adsorption inlet gas) G4 of the cooling treatment gas to be supplied to concentration device 300 and remaining part (return gas) G6 of the cooling treatment gas is made. Chamber 123 has a partitioning section 128 that enables suctioning of first flow passage F1 to face an exhaust direction of cooling treatment gas G3 discharged from net-like structure 121.

Concentration device 300 has an adsorption element 310 including an adsorption material that adsorbs the contained organic solvent by the gas coming into contact with the adsorption material and desorbs the adsorbed organic solvent by heated gas coming into contact with the adsorption material. Also, adsorption element 310 includes a desorption section (desorption zone) 311 and an adsorption section (adsorption zone) 312. In adsorption section 312, the organic solvent contained in part (adsorption inlet gas) G4 of the cooling treatment gas is adsorbed by the adsorption material by part (adsorption inlet gas) G4 of the cooling treatment gas being introduced and by part (adsorption inlet gas) G4 of the cooling treatment gas coming into contact with the adsorption material, and part (adsorption inlet gas) G4 of the cooling treatment gas is thereby cleaned and is discharged as cleaned gas G9.

In desorption section 311, the organic solvent is desorbed from the adsorption material by gas G10 at a higher temperature than part (adsorption inlet gas) G4 of the cooling treatment gas being introduced into the adsorption material, and the gas is thereby discharged as desorption gas G11 containing the organic solvent.

As the adsorption material contained in adsorption element 310, activated alumina, silica gel, an activated carbon material, and zeolite have widely been used, and among these, activated carbon and hydrophobic zeolite have been particularly suitably used. Activated carbon and hydrophobic zeolite have an excellent function of adsorbing and desorbing an organic compound at low concentration and have been used as adsorption materials in various devices from long time ago.

Although a specific configuration of the concentration device according to the present embodiment is not particularly limited, a configuration in which the concentration device includes a rotation shaft and adsorption element 310 provided around the rotation shaft and the adsorption material adsorbing the organic solvent in part (adsorption inlet gas) G4 of the cooling treatment gas continuously moves to desorption section 311 in adsorption section 312 by causing adsorption element 310 to rotate about the rotation shaft as illustrated in Fig. 1 is known.

In concentration device 300 according to the embodiment, desorption section 311 is preferably disposed further downward than adsorption section 312 as illustrated in Fig. 1. This is because desorbed condensed liquid L2 is unlikely to adhere to adsorption section 312 even in a case where a part of the organic solvent contained in desorption gas G11 is liquefied and condensed and desorbed condensed liquid L2 is generated. Desorbed condensed liquid L2 drops downward from desorption section 311, follows an inner surface or the like of an exterior of the desorption section, and is then recovered. More preferably, desorption section 311 is inclined downward as illustrated in Fig. 1. This is because desorbed condensed liquid L2 is more likely drop downward.

Concentration device 300 may have a purge section (not illustrated) to which a part on which desorption treatment has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by purging the adsorption material on which desorption has been completed with cleaned gas G9.

In concentration device 300, high-temperature gas G10 used for the desorption is preferably obtained by bringing a part of cleaned gas G9 into a high-temperature state by using heating means such as a regeneration heater 350. This is because the amount of treatment air for the gas containing the organic solvent does not increase in the adsorption section 312. In a case where the temperature of exhaust gas G1 is a temperature of 50 to 200°C, it is more preferable to raise the temperature of the part of exhaust gas G1 with regeneration heater 350 or the like and to use it. This is because it is possible to reduce the utility of using regeneration heater 350 and to eliminate a need of regeneration heater 350 for the desorption depending on the temperature of exhaust gas G1 by using high-temperature exhaust gas G1 for the desorption. Also, rates at which exhaust gas G1 and desorption gas G11 are caused to pass to cooling condensing device 100 are assumed to be 0% to 50% for exhaust gas G1 and 50% to 100% for desorption gas G11.

First flow passage F1 is a portion that introduces part (adsorption inlet gas) G4 of the cooling treatment gas from chamber 123 into concentration device 300. A connection port of first flow passage F1 to chamber 123 is preferably a ceiling section 127 of chamber 123. This is for curbing invasion of a small amount of liquid droplets that cannot be captured by separating section 120 into concentration device 300 and preventing degradation of performance and degradation of strength of concentration device 300 due to leakage of adsorption element 310, which will be described later. Further preferably, it is better to provide partitioning section 128 to take out part (adsorption inlet gas) G4 of the cooling treatment gas such that partitioning section 128 faces a ventilation direction of cooling treatment gas G3. It is possible to further prevent invasion of the liquid droplets. In addition to this, a liquid droplet invasion preventing member that is similar to net-like structure 121 may be provided or a heater for vaporizing the liquid droplets may be provided, at the extraction port of part (adsorption inlet gas) G4 of the cooling treatment gas.

Second flow passage F2 is a portion that returns desorption gas G11 to the introduction section of exhaust gas G1 of cooling condensing device 100. Second flow passage F2 is preferably connected such that desorption section 311 is arranged further upward than a meeting position of desorption gas G11 and exhaust gas G1 to be supplied to cooling condensing device 100. This is because desorbed condensed liquid L2 generated from desorption gas G11 in concentration device 300 is likely to be transferred to cooling condensing device 100. Further preferably, it is better to employ a configuration in which ventilation to two locations, namely the introduction section of exhaust gas G1 and tank 125 in cooling condensing device 100 is made. This is because desorbed condensed liquid L2 generated from desorption gas G11 is more likely to be recovered directly to tank 125.

Although high-temperature gas G10 used to perform desorption in concentration device 300 in organic solvent recovery system 1A according to the embodiment is preferably obtained by bringing a part of cleaned gas G9 into a high-temperature state by using heating means such as regeneration heater 350 as described above, it is more preferable to raise the temperature of a part of exhaust gas G1 with regeneration heater 350 or the like and to use it in a case where the temperature of exhaust gas G1 is a temperature of 50 to 200°C. This is because it is possible to reduce the utility of using regeneration heater 350 and to eliminate a need of regeneration heater 350 for the desorption depending on the temperature of exhaust gas G1, by using the high-temperature exhaust gas for the desorption. Additionally, rates at which exhaust gas G1 and desorption gas G11 are caused to pass to cooling condensing device 100 are assumed to be 0% to 50% for exhaust gas G1 and 50% to 100% for desorption gas G11.

In a case where exhaust gas G1 is gas discharged from production facility 130, a configuration in which remaining part (return gas) G6 of the cooling treatment gas is returned to production facility 130 may be employed.

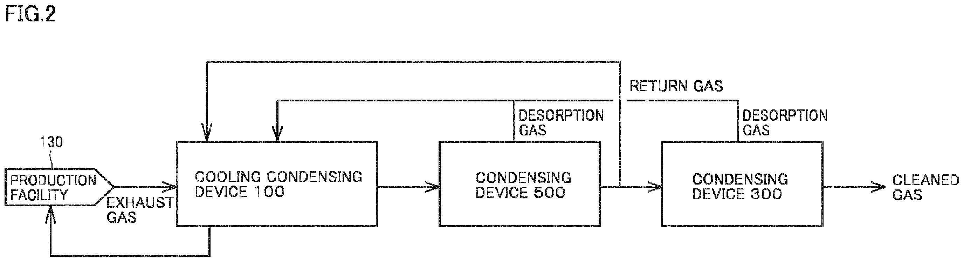

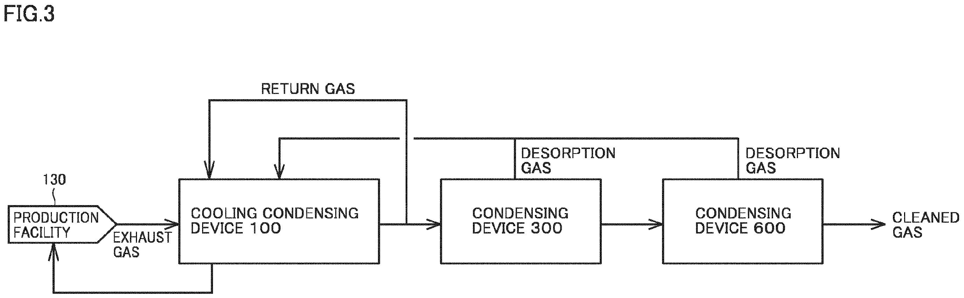

In a case where it is desired to further reduce the concentration of the organic solvent contained in remaining part (return gas) G6 of the cooling treatment gas, a concentration device 500 that treats remaining part (return gas) G6 of the cooling treatment gas may be additionally introduced as illustrated in Fig. 2. In a case where it is desired to further reduce the concentration of the organic solvent contained in cleaned gas G9, a concentration device 600 that treats cleaned gas G9 may be additionally introduced as illustrated in Fig. 3. Concentration device 500 and concentration device 600 may have the same configurations as or different configurations from that of concentration device 300. Also, the number of concentration devices to be additionally introduced is not limited. The desorption gas discharged from any of the concentration devices is returned to the introduction section of exhaust gas G1 in cooling condensing device 100 via second flow passage F2.

In the embodiment, an organic solvent that liquefied through cooling at 1°C to 50°C and can be recovered is listed as the organic solvent contained in exhaust gas G1. Examples of the organic solvent include N-methyl-2-pyrrolidon, N-ethyl-2-pyrrolidon, N,N-dimehylformamide, N,N-dimethylacetamide, and n-decane. These are examples, and the organic solvent is not limited thereto. One kind or more kinds of organic solvents may be contained.

### [Embodiment 1B]

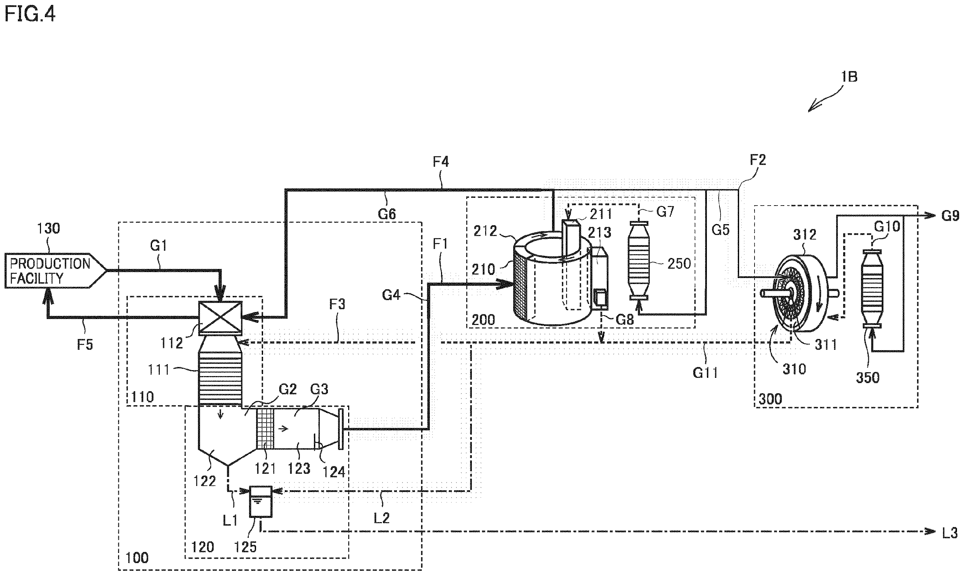

Fig. 4 is a diagram schematically illustrating a configuration of an organic solvent recovery system 1B according to an embodiment 1B. Organic solvent recovery system 1B is configured of a cooling condensing device 100, a first concentration device 200, a second concentration device 300, and various flow passages.

Cooling condensing device 100 has a cooling section 110 and a separating section 120. Exhaust gas G1 containing an organic solvent is discharged from a production facility 130. Exhaust gas G1 is cooled by passing through cooling section 110. The organic solvent is liquefied and condensed along with exhaust gas G1 passing through cooling section 110.

Exhaust gas G2 that has passed through cooling section 110 is separated into a cooled condensed liquid L1 that has been liquefied and condensed and cooling treatment gas G3 with reduced concentration of the organic solvent by passing through separating section 120. Cooling treatment gas G3 is discharged as cooling treatment gas G4 from cooling condensing device 100 to first concentration device 200 through a chamber 123.

Cooling means and a configuration of cooling section 110 are not particularly limited. In embodiment 1B, a first heat exchanger 111 that performs cooling through indirect heat exchange between a refrigerant such as cooling water, cool water, or brine and the exhaust gas is used. First heat exchanger 111 is located such that exhaust gas G1 flows in an up-down direction.

Cooling section 110 is provided with a second heat exchanger 112 that cools exhaust gas G1 through heat exchange between cooling treatment gas G6, which will be described later, and exhaust gas G1 before first heat exchanger 111. Second heat exchanger 112 can reduce the heat transmission area and the amount of refrigerant required by first heat exchanger 111. A part of exhaust gas G1 and cooling treatment gas G6 is returned to production facility 130 through a fifth flow passage F5. Conditions such as cooling temperatures for first heat exchanger 111 and second heat exchanger 112 may be appropriately determined depending on the organic solvent as a target of recovery.

Separating means and a configuration of separating section 120 are not particularly limited. In embodiment 1B, a net-like structure 121 that brings liquid droplets into contact with net-like structure 121 and captures the liquid droplets, such as a demister, a filter, or a mesh is used. Separating section 120 has a receiving section 122 with a funnel shape that receives cooled condensed liquid L1 cooled by cooling section 110 and containing the organic solvent. Cooled condensed liquid L1 cooled by cooling section 110 and cooled condensed liquid L1 captured by net-like structure 121 flow into receiving section 122 due to the gravity, are then collected in a tank 125 arranged below receiving section 122, and are recovered as recovered liquid L3.

Chamber 123 is a structure having a space with a specific capacity. A dam 124 is provided inside chamber 123. Dam 124 prevents a part of cooled condensed liquid L1 from moving to a distal end direction of chamber 123 and flowing into first flow passage F1 as a cooling gas flow passage. Dam 124 works to reliably recover cooled condensed liquid L1. Cooling treatment gas G3 stored inside chamber 123 for a specific period of time flows as cooling treatment gas G4 through first flow passage F1 and is supplied to first concentration device 200.

Organic solvent recovery system 1B has a structure in which exhaust gas G1 (exhaust gas G2, cooling treatment gas G3) flows in an L-shaped direction by a flowing direction from net-like structure 121 to chamber 123 inside separating section 120 intersecting a flowing direction from cooling section 110 to separating section 120 when seen along a direction in which exhaust gas G1 flows.

Since a location configured of cooling section 110 and separating section 120 has an L-shaped structure, organic solvent recovery system 1B can curb exposure of first concentration device 200 and second concentration device 300 due to liquid droplets and splash. If first concentration device 200 and second concentration device 300 are exposed and an adsorbent gets wet, degradation of strength or damage may occur. Organic solvent recovery system 1B can prevent degradation of strength and damage of first concentration device 200 and second concentration device 300 by having the L-shaped structure.

First concentration device 200 has an adsorption rotor 212 including an adsorption material that adsorbs a contained organic solvent by the gas coming into contact with the adsorption material and desorbs the adsorbed organic solvent by heated gas coming into contact with the adsorption material. Adsorption rotor 212 is configured of a plurality of adsorption units 210 partitioned by a plurality of partitioning sections. Adsorption rotor 212 has a hollow columnar shape as a whole by the plurality of adsorption units 210. Adsorption rotor 212 is installed inside a treatment room and is provided such that a fluid can flow in a radial direction. Adsorption rotor 212 is provided to receive a rotation drive force of a motor and to be rotatable about a cylinder shaft.

In first concentration device 200, some of adsorption units 210 constitutes an adsorption section that adsorbs the organic solvent contained in cooling treatment gas G4 supplied from the outside to the inside of adsorption units 210, and the remaining part of adsorption units 210 constitutes a desorption section that desorbs the organic solvent adsorbed by adsorption units 210 from adsorption units 210 by supplying heated air from the inside to the outside of adsorption units 210.

Cooling treatment gas G4 supplied to the inside of the treatment room is introduced from an outer circumferential surface of adsorption rotor 212 into the adsorption section for cleaning. Cooling treatment gas G4 introduced into the adsorption section is cleaned by the plurality of adsorption units 210 located in the adsorption section caused to adsorb the organic solvent when cooling treatment gas G4 passes through adsorption rotor 212 from the outer circumferential surface to an inner circumferential surface in the radial direction.

Cooling treatment gas G5 and G6 as cleaned treated fluids is discharged as cleaned gas from the upper portions of adsorption units 210. A part of discharged cleaned gas flows as cooling treatment gas G5 through a second flow passage F2 and is supplied to second concentration device 300. A part of discharged cleaned gas flows as cooling treatment gas G6 through a fourth flow passage F4 and is returned to second heat exchanger 112.

An inner circumference-side flow path forming member 211 and an outer circumference-side flow path forming member 213 are disposed to face each other on the inner circumference side and the outer circumference side of adsorption rotor 212 such that a part of adsorption rotor 212 in a circumferential direction is sandwiched therebetween. A region of adsorption rotor 212 sandwiched between inner circumference-side flow path forming member 211 and outer circumference-side flow path forming member 213 is the desorption section.

In order to desorb the organic solvent, high-temperature gas G7 which is a part of cooling treatment gas G5 heated by regeneration heater 250 is introduced from inner circumference-side flow path forming member 211 into the desorption section. High-temperature gas G7 introduced into the desorption section desorbs the organic solvent adsorbed by the plurality of adsorption units 210 located at the desorption section by heat from adsorption units 210 when high-temperature gas G7 passes through adsorption rotor 212. Desorption gas G8 containing the organic solvent is discharged as concentrated gas from the desorption section to the outside of the treatment room through outer circumference-side flow path forming member 213 and is returned to a third flow passage F3. A part of the organic solvent contained in desorption gas G8 is liquefied, condensed, and collected as desorbed condensed liquid L2 in tank 125.

Third flow passage F3 is a portion that returns desorption gas G8 and desorption gas G11, which will be described later, to the introduction section of exhaust gas G1 in cooling condensing device 100. Third flow passage F3 is preferably connected such that the desorption section is arranged further upward than a meeting position of the desorption gas and exhaust gas G1 to be supplied to cooling condensing device 100. This is because desorbed condensed liquid L2 generated from desorption gas G8 in first concentration device 200 and desorption gas G11 in second concentration device 300 is likely to be transferred to cooling condensing device 100. It is better for third flow passage F3 to employ a configuration in which ventilation to two locations, namely the introduction section of exhaust gas G1 and the tank 125 in cooling condensing device 100 is made. This is because desorbed condensed liquid L2 generated from desorption gas G8 and desorption gas G11 is likely to be directly recovered to tank 125.

In first concentration device 200, adsorption treatment of a treated substance is performed on adsorption units 210 located at the adsorption section, and desorption treatment of the treated substance is performed on adsorption units 210 located at the desorption section after the adsorption treatment. The adsorption treatment and the desorption treatment of the treated substance are continuously performed by adsorption rotor 212 rotating about the cylinder shaft and by adsorption units 210 alternately moving between the desorption section and the adsorption section.

As a material of the adsorption elements constituting adsorption units 210, it is possible to use activated alumina, silica gel, an activated carbon material, zeolite, or the like. The shape of the adsorption elements in adsorption units 210 is not particularly limited, and a sheet containing an activated carbon material or zeolite and formed into a honey comb shape or a laminate of an activated carbon fiber nonwoven fabric, for example, may be employed.

Second concentration device 300 has an adsorption element 310 including an adsorption material that adsorbs the contained organic solvent by gas coming into contact with the adsorption material and desorbs the adsorbed organic solvent by heated gas coming into contact with the adsorption material. Adsorption element 310 includes a desorption section (desorption zone) 311 and an adsorption section (adsorption zone) 312. In adsorption section 312, the organic solvent contained in cooling treatment gas G5 is adsorbed by the adsorption material, and cooling treatment gas G5 is cleaned and discharged as cleaned gas G9, by cooling treatment gas G5 being introduced and by cooling treatment gas G5 coming into contact with the adsorption material.

In desorption section 311, the organic solvent is desorbed from the adsorption material, and the gas is thereby discharged as desorption gas G11 containing the organic solvent, by high-temperature gas G10 at a higher temperature than cooling treatment gas G5 being introduced into the adsorption material.

As the adsorption material contained in adsorption element 310, activated alumina, silica gel, an activated carbon material, and zeolite have widely been used, and among these, activated carbon and hydrophobic zeolite have been particularly suitably used.

As illustrated in Fig. 4, second concentration device 300 includes a rotation shaft and adsorption element 310 provided around the rotation shaft. Second concentration device 300 has a configuration in which the adsorption material that has adsorbed the organic solvent in cooling treatment gas G5 introduced from second flow passage F2 continuously moves to desorption section 311 in adsorption section 312 by causing adsorption element 310 to rotate about the rotation shaft.

As illustrated in Fig. 4, desorption section 311 is preferably arranged further downward than adsorption section 312 in second concentration device 300. This is because desorbed condensed liquid L2 is unlikely to adhere to adsorption section 312 even in a case where a part of the organic solvent contained in desorption gas G11 is liquefied and condensed and desorbed condensed liquid L2 is generated. Desorbed condensed liquid L2 drops downward from desorption section 311, follows an inner surface of the exterior of the desorption section, and is recovered. More preferably, it is better to incline desorption section 311 downward to facilitate downward dropping of desorbed condensed liquid L2.

Second concentration device 300 may have a cleaning section (purge section) to which a part on which desorption processing has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by cleaned gas G9 cleaning the adsorption material on which desorption has been completed.

High-temperature gas G10 used for the desorption is preferably obtained by bringing a part of cleaned gas G9 into a high-temperature state by using heating means such as regeneration heater 350. This is because the amount of treatment air for the gas containing the organic solvent does not increase in adsorption section 312.

### [Embodiment 2B]

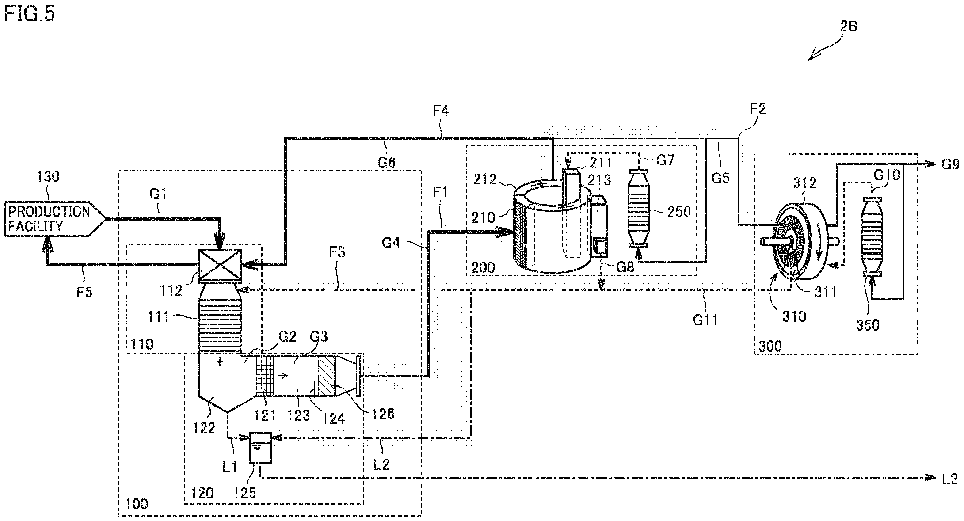

Fig. 5 is a diagram schematically illustrating a configuration of an organic solvent recovery system 2B according to an embodiment 2B. Organic solvent recovery system 2B is configured of a cooling condensing device 100, a first concentration device 200, a second concentration device 300, and various flow passages. Organic solvent recovery system 2B is the same as organic solvent recovery system 1B according to embodiment 1B other than that a heater 126 is provided in a chamber 123.

Heater 126 slightly heats cooling treatment gas G3 after cooling. Cooling treatment gas G3 can prevent the organic solvent or moisture from being condensed by being slightly heated.

### [Effects and advantages]

Cooling condensing device 100 according to the present embodiment includes a cooling section 110 through which exhaust gas G1 is caused to flow and a separating section 120 that is located on a side downstream cooling section 110 when seen along a direction in which exhaust gas G1 flows. Separating section 120 has a receiving section 122 that receives a cooled condensed liquid L1 cooled by cooling section 110 and containing the organic solvent, a net-like structure 121 that separates cooled condensed liquid L1 and cooling treatment gas G3 by bringing exhaust gas G2 after cooling into contact with net-like structure 121, and chamber 123 that stores cooling treatment gas G3 after passing through net-like structure 121 for a specific period of time.

The exhaust gas flows in an L-shaped direction by a flowing direction from net-like structure 121 to chamber 123 inside separating section 120 intersecting a flowing direction from cooling section 110 to separating section 120 when seen along the direction in which exhaust gas G1 flows. It is thus possible to recover cooled condensed liquid L1 containing the organic solvent from exhaust gas G1 with high efficiency. Since the portion configured of cooling section 110 and separating section 120 have an L-shaped structure, the organic solvent recovery system according to the present embodiment can curb exposure of first concentration device 200 and second concentration device 300 provided in a later stage due to liquid droplets and splash.

Heater 126 for heating cooling treatment gas G3 is arranged on the side downstream net-like structure 121 according to the present embodiment. It is thus possible to prevent the organic solvent or moisture from being condensed by cooling treatment gas G3 being slightly heated.

A dam 124 is provided in chamber 123 according to the present embodiment. It is thus possible to prevent cooled condensed liquid L1 from flowing through first flow passage F1 as a cooling gas flow passage.

The concentration device according to the present embodiment includes first concentration device 200 and second concentration device 300 located on the side downstream the first concentration device. First concentration device 200 adsorbs the organic solvent contained in cooling treatment gas G4 introduced from first flow passage F1 by adsorption units 210, discharges the gas as cooling treatment gas G5 with further reduced concentration of the organic solvent, introduces high-temperature gas G7, desorbs the organic solvent from adsorption units 210, and discharges the gas as desorption gas G8.

The organic solvent recovery system according to the present embodiment further includes a second flow passage F2 that causes a part of cooling treatment gas G5 to flow therethrough, and second concentration device 300 adsorbs the organic solvent contained in cooling treatment gas G5 introduced from second flow passage F2 by an adsorption element 310, discharges the gas as cleaned gas G9 with further reduced concentration of the organic solvent, introduces high-temperature gas G10, desorbs the organic solvent from adsorption element 310, and discharges the gas as desorption gas G11.

In first concentration device 200 according to the present embodiment, a plurality of adsorption units 210 are arranged in a circumferential direction around a cylinder shaft of a rotor with a hollow columnar shape rotating about the cylinder shaft. It is thus possible to recover the organic solvent with high efficiency.

In second concentration device 300 according to the present embodiment, adsorption element 310 is arranged at an adsorption rotor with a disc shape rotating about a cylinder shaft. It is thus possible to recover the organic solvent with high efficiency.

### [Other embodiments]

In the above embodiment, two concentration devices, namely first concentration device 200 and second concentration device 300 are used. As the concentration devices, two first concentration devices 200 or two second concentration devices 300 may be applied in accordance with the amount of air. Also, three or more concentration devices may be applied in accordance with removal efficiency.

As the organic solvent contained in exhaust gas G1, an organic solvent that is liquefied though cooling at 1°C to 50°C and can be recovered is listed. Examples of the organic solvent include N-methyl-2-pyrrolidon, N-ethyl-2-pyrrolidon, N,N-dimethylformamide, N,N-dimethylacetamide, and n-decane. These are examples, and the organic solvent is not limited thereto. One kind or more kinds of the organic solvents may be contained.

### [Embodiment 1C]

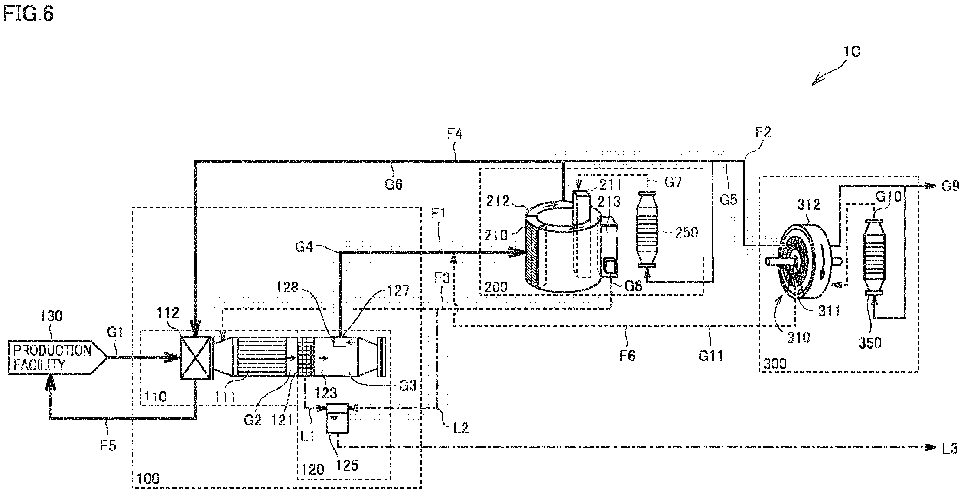

Fig. 6 is a diagram schematically illustrating a configuration of an organic solvent recovery system 1C according to an embodiment 1C. Organic solvent recovery system 1C is configured of a cooling condensing device 100, a first concentration device 200, a second concentration device 300, and various flow passages.

Cooling condensing device 100 has a cooling section 110 and a separating section 120. Exhaust gas G1 containing an organic solvent is discharged from a production facility 130. Exhaust gas G1 is cooled by passing through cooling section 110. The organic solvent is liquefied and condensed by exhaust gas G1 passing through cooling section 110.

Exhaust gas G2 that has passed through cooling section 110 is separated into a cooled condensed liquid L1 that has been liquefied and condensed and cooling treatment gas G3 with reduced concentration of the organic solvent by passing through separating section 120. Cooling treatment gas G3 is discharged as cooling treatment gas G4 from cooling condensing device 100 to first concentration device 200 through a chamber 123.

Cooling means and a configuration of cooling section 110 are not particularly limited. In an embodiment 1, a first heat exchanger 111 that performs cooling through indirect heat exchange between a refrigerant such as cooling water, cool water, or brine and the exhaust gas is used. First heat exchanger 111 is located such that exhaust gas G1 flows in a horizontal direction.

Cooling section 110 is provided with a second heat exchanger 112 that cools exhaust gas G1 through heat exchange between cooling treatment gas G6, which will be described later, and exhaust gas G1 before first heat exchanger 111. Second heat exchanger 112 can reduce the heat transmission area and the amount of refrigerant required by first heat exchanger 111. A part of exhaust gas G1 and cooling treatment gas G6 is returned to production facility 130 through a fifth flow passage F5. Conditions such as cooling temperatures for first heat exchanger 111 and second heat exchanger 112 may be appropriately determined depending on the organic solvent as a target of recovery.

Separating means and a configuration of separating section 120 are not particularly limited. In embodiment 1C, a net-like structure 121 that brings liquid droplets into contact with net-like structure 121 and captures the liquid droplets, such as a demister, a filter, or a mesh is used. Cooled condensed liquid L1 captured by net-like structure 121 is collected in a tank 125 arranged below net-like structure 121 due to the gravity and is recovered as a recovered liquid L3.

Chamber 123 is a structure having a space with a specific capacity. Cooling treatment gas G3 stored in chamber 123 for a specific period of time flows as cooling treatment gas G4 through a first flow passage F1 and is supplied to first concentration device 200. Chamber 123 has a partitioning section 128 that enables suctioning of first flow passage F1 to face an exhaust direction of cooling treatment gas G3 discharged from net-like structure 121.

First flow passage F1 is a portion that introduces cooling treatment gas G4 from chamber 123 into first concentration device 200. A connection port of first flow passage F1 to chamber 123 is preferably a ceiling section 127 of chamber 123. It is thus possible to curb invasion of a small amount of liquid droplets that cannot be captured by separating section 120 into first concentration device 200 and to prevent degradation of performance, degradation of strength, and the like due to leakage of adsorption units 210 in first concentration device 200, which will be described later. Further preferably, it is better to take out cooling treatment gas G4 to face a ventilation direction of cooling treatment gas G3. It is thus possible to further prevent invasion of liquid droplets. A liquid droplet invasion preventing member that is similar to net-like structure 121 may be provided, or a heater for vaporizing the liquid droplets may be provided, at an extraction port of cooling treatment gas G4.

First concentration device 200 has an adsorption rotor 212 including an adsorption material that adsorbs the contained organic solvent by the gas coming into contact with the adsorption material and desorbs the adsorbed organic solvent by the heated gas coming into contact with the adsorption material. Adsorption rotor 212 is configured of a plurality of adsorption units 210 partitioned by a plurality of partitioning sections. Adsorption rotor 212 has a hollow columnar shape as a whole by the plurality of adsorption units 210. Adsorption rotor 212 is installed inside a treatment room and is provided such that a fluid can flow in a radial direction. Adsorption rotor 212 is provided to receive a rotation drive force of a motor and to be rotatable about a cylinder shaft.

In first concentration device 200, some of adsorption units 210 constitute an adsorption section that adsorbs the organic solvent contained in cooling treatment gas G4 supplied from the outside to the inside of adsorption units 210, and the remaining part of adsorption units 210 constitutes a desorption section that desorbs the organic solvent adsorbed by adsorption units 210 from adsorption units 210 by supplying heated air from the inside to the outside of adsorption units 210.

Cooling treatment gas G4 supplied to the treatment room is introduced from an outer circumferential surface of adsorption rotor 212 into the adsorption section for cleaning. Cooling treatment gas G4 introduced into the adsorption section is cleaned by the plurality of adsorption units 210 located at the adsorption section adsorbing the organic solvent when cooling treatment gas G4 passes through adsorption rotor 212 from the outer circumferential surface to an inner circumferential surface along the radial direction.

Cooling treatment gas G5 and G6 as cleaned treated fluids is discharged as cleaned gas from the upper portions of adsorption units 210. A part of the discharged cleaned gas flows as cooling treatment gas G5 through a second flow passage F2 and is supplied to second concentration device 300. A part of discharged cleaned gas flows as cooling treatment gas G6 through a fourth flow passage F4 and is returned to second heat exchanger 112.

An inner circumference-side flow path forming member 211 and an outer circumference-side flow path forming member 213 are arranged to face each other on the inner circumferential side and the outer circumferential side of adsorption rotor 212 to sandwich a part of adsorption rotor 212 in a circumferential direction therebetween. A region of adsorption rotor 212 sandwiched between inner circumference-side flow path forming member 211 and outer circumference-side flow path forming member 213 is the desorption section.

In order to desorb the organic solvent, high-temperature gas G7 which is a part of cooling treatment gas G5 heated by regeneration heater 250 is introduced from inner circumference-side flow path forming member 211 into the desorption section. High-temperature gas G7 introduced into the desorption section desorbs the organic solvent adsorbed by the plurality of adsorption units 210 located at the desorption section by heat from adsorption units 210 when high-temperature gas G7 passes through adsorption rotor 212. Desorption gas G8 containing the organic solvent is discharged as concentrated gas from the desorption section to the outside of the treatment room through outer circumference-side flow path forming member 213 and is returned to a third flow passage F3. A part of the organic solvent contained in desorption gas G8 is liquefied, condensed, and collected as desorbed condensed liquid L2 in tank 125.

Third flow passage F3 is a portion that returns desorption gas G8 to the introduction section of exhaust gas G1 in cooling condensing device 100. Third flow passage F3 is preferably connected such that the desorption section is arranged further upward than a meeting position of desorption gas G8 and exhaust gas G1 to be supplied to cooling condensing device 100. This arrangement facilitates transfer of desorbed condensed liquid L2 generated from desorption gas G8 in first concentration device 200 to cooling condensing device 100. It is better for third flow passage F3 to employ a configuration in which ventilation to two locations, namely the introduction section of exhaust gas G1 and tank 125 in cooling condensing device 100 is made. With this configuration, desorbed condensed liquid L2 generated from desorption gas G8 is likely to be recovered directly to tank 125.

In first concentration device 200, adsorption treatment of a treated substance is performed on adsorption units 210 located at the adsorption section, and desorption treatment of the treated substance is performed on adsorption units 210 located at the desorption section after the adsorption treatment. The adsorption treatment and the desorption treatment of the treated substance are continuously performed by adsorption rotor 212 rotating about the cylinder shaft and by adsorption units 210 alternately moving between the desorption section and the adsorption section.

As a material of the adsorption elements constituting adsorption units 210, it is possible to use activated alumina, silica gel, an activated carbon material, zeolite, or the like. The shape of the adsorption elements in adsorption units 210 is not particularly limited, and a sheet containing an activated carbon material or zeolite and formed into a honey comb shape or a laminate of an activated carbon fiber nonwoven fabric, for example, may be employed.

Second concentration device 300 has an adsorption element 310 including an adsorption material that adsorbs the contained organic solvent by gas coming into contact with the adsorption material and desorbs the adsorbed organic solvent by heated gas coming into contact with the adsorption material. Adsorption element 310 includes a desorption section (desorption zone) 311 and an adsorption section (adsorption zone) 312. In adsorption section 312, the organic solvent contained in cooling treatment gas G5 is adsorbed by the adsorption material, and cooling treatment gas G5 is cleaned and discharged as cleaned gas G9, by cooling treatment gas G5 being introduced and by cooling treatment gas G5 coming into contact with the adsorption material.

In desorption section 311, the organic solvent is desorbed from the adsorption material, and the gas is thereby discharged as desorption gas G11 containing the organic solvent, by high-temperature gas G10 at a higher temperature than cooling treatment gas G5 being introduced into the adsorption material. Desorption gas G11 is returned to first flow passage F1 through a sixth flow passage F6.

Since desorption gas G11 is returned to first flow passage F1 in organic solvent recovery system 1C, there is no need to perform treatment corresponding to the amount of air of desorption gas G11 in cooling condensing device 100. Organic solvent recovery system 1C can thus contribute to size reduction and energy saving of cooling condensing device 100. Organic solvent recovery system 1C can curb condensation of NMP (N-methyl-2-pyrrolidone), moisture, and the like contained in cooling treatment gas G4 since the temperature of desorption gas G11 is high.

As the adsorption material contained in adsorption element 310, activated alumina, silica gel, an activated carbon material, and zeolite have widely been used, and among these, activated carbon and hydrophobic zeolite have been particularly suitably used.

As illustrated in Fig. 6, second concentration device 300 includes a rotation shaft and adsorption element 310 provided around the rotation shaft. Second concentration device 300 has a configuration in which the adsorption material that has adsorbed the organic solvent in cooling treatment gas G5 introduced from second flow passage F2 continuously moves to desorption section 311 from adsorption section 312 by causing adsorption element 310 to rotate about the rotation shaft.

Second concentration device 300 may have a cleaning section (purge section) to which a part on which desorption processing has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by cleaned gas G9 cleaning the adsorption material on which desorption has been completed.

High-temperature gas G10 used for the desorption is preferably obtained by bringing a part of cleaned gas G9 into a high-temperature state by using heating means such as a regeneration heater 350. It is possible to curb an increase in the amount of treatment air for the gas containing the organic solvent in adsorption section 312.

### [Embodiment 2C]

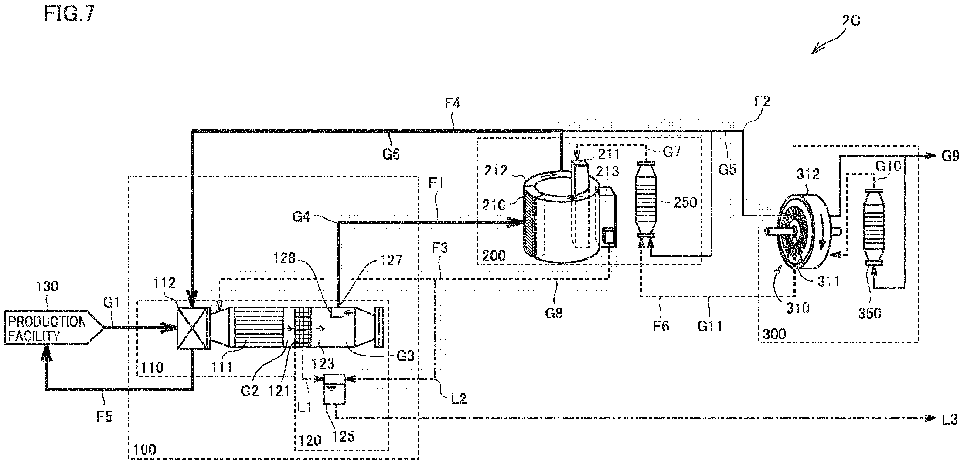

Fig. 7 is a diagram schematically illustrating a configuration of an organic solvent recovery system 2C according to an embodiment 2C. Organic solvent recovery system 2C is configured of a cooling condensing device 100, a first concentration device 200, a second concentration device 300, and various flow passages. Organic solvent recovery system 2C is the same as organic solvent recovery system 1C according to embodiment 1C in regard to configurations other than that desorption gas G11 in second concentration device 300 is returned to a regeneration heater 250 through a sixth flow passage F6.

Organic solvent recovery system 2C returns desorption gas G11 to regeneration heater 250, and there is thus no need to perform treatment corresponding to the amount of air of desorption gas G11 in cooling condensing device 100 and first concentration device 200. Therefore, organic solvent recovery system 2C can contribute to size reduction and energy saving of cooling condensing device 100 and first concentration device 200. Organic solvent recovery system 2C can contribute to energy saving of regeneration heater 250 since the temperature of desorption gas G11 is high.

### [Embodiment 3C]

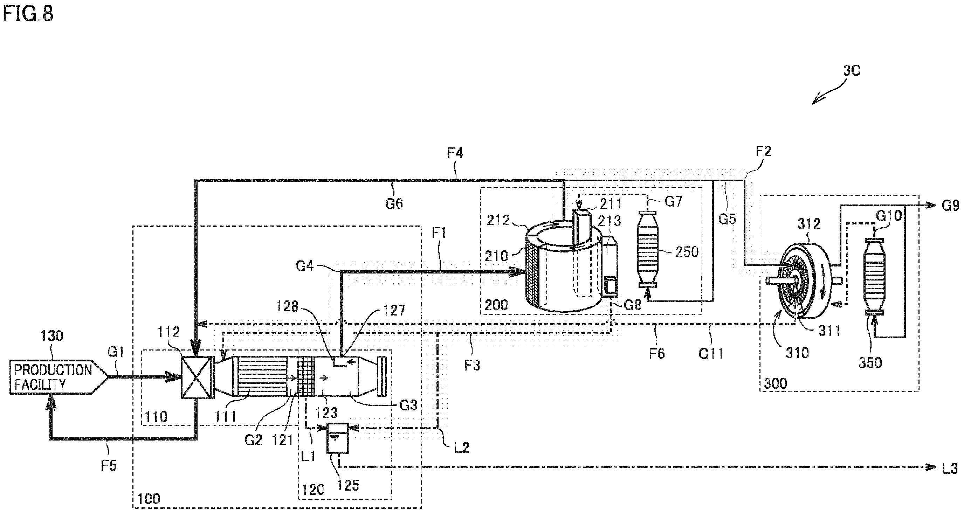

Fig. 8 is a diagram schematically illustrating a configuration of an organic solvent recovery system 3C according to an embodiment 3C. Organic solvent recovery system 3C is configured of a cooling condensing device 100, a first concentration device 200, a second concentration device 300, and various flow passages. In organic solvent recovery system 3C, desorption gas G11 in second concentration device 300 is returned to a fourth flow passage F4 through a sixth flow passage F6. Organic solvent recovery system 3C is the same as organic solvent recovery system 1C according to embodiment 1C in regard to configurations other than that desorption gas G11 in second concentration device 300 is returned to fourth flow passage F4 through sixth flow passage F6.

Desorption gas G11 that has passed through sixth flow passage F6 flows through fourth flow passage F4 along with cooling treatment gas G6 discharged from second concentration device 300 and is returned to second heat exchanger 112. There is no need for organic solvent recovery system 3C to perform treatment corresponding to the amount of air of desorption gas G11 in cooling condensing device 100 and first concentration device 200. Organic solvent recovery system 3C can thus contribute to size reduction and energy saving of cooling condensing device 100 and first concentration device 200. Organic solvent recovery system 3C can improve the temperature of a fluid flowing through second heat exchanger 112 since the temperature of desorption gas G11 is high and can contribute to size reduction and energy saving of second heat exchanger 112 for cooling exhaust gas G1.

### [Embodiment 4C]

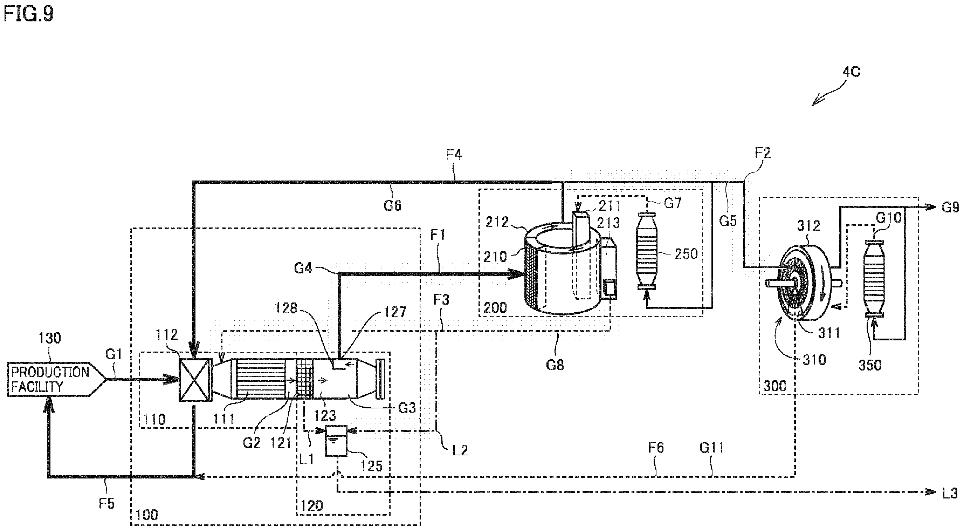

Fig. 9 is a diagram schematically illustrating a configuration of an organic solvent recovery system 4C according to an embodiment 4C. Organic solvent recovery system 4C is configured of a cooling condensing device 100, a first concentration device 200, a second concentration device 300, and various flow passages. In organic solvent recovery system 4C, desorption gas G11 in second concentration device 300 is returned to a fifth flow passage F5 through a sixth flow passage F6. Organic solvent recovery system 4C is the same as organic solvent recovery system 1C according to embodiment 1C in regard to configurations other than that desorption gas G11 in second concentration device 300 is returned to fifth flow passage F5 through sixth flow passage F6.

Desorption gas G11 that has passed through sixth flow passage F6 flows through fifth flow passage F5 along with a part of exhaust gas G1 and cooling treatment gas G6 discharged from a second heat exchanger 112 and is returned to a production facility 130. There is no need for organic solvent recovery system 4C to perform treatment corresponding to the amount of air of desorption gas G11 in cooling condensing device 100 and first concentration device 200. Organic solvent recovery system 4C can thus contribute to size reduction and energy saving of cooling condensing device 100 and first concentration device 200. Organic solvent recovery system 4C can raise the temperature of exhaust gas G1 discharged again from production facility 130 since the temperature of desorption gas G11 is high. Organic solvent recovery system 4C can improve the temperature of a fluid flowing through second heat exchanger 112 and can contribute to size reduction and energy saving of second heat exchanger 112 for cooling exhaust gas G1.

### [Effects and advantages]

Organic solvent recovery system 1C according to the present embodiment includes cooling condensing device 100 that liquefies and condenses an organic solvent by cooling exhaust gas G1 containing the organic solvent and discharges the exhaust gas G1 as cooling treatment gas G4 with reduced concentration of the organic solvent, first flow passage F1 that causes cooling treatment gas G4 to pass therethrough, first concentration device 200 that adsorbs, by adsorption units 210, the organic solvent contained in cooling treatment gas G4 introduced from first flow passage F1, discharges cooling treatment gas G4 as cooling treatment gas G5 with further reduced concentration of the organic solvent, introduces high-temperature gas G7, desorbs the organic solvent from adsorption unit 210, and discharges high-temperature gas G7 as desorption gas G8, second flow passage F2 that causes a part of cooling treatment gas G5 to pass therethrough, and second concentration device 300 that adsorbs, by adsorption element 310, the organic solvent contained in cooling treatment gas G5 introduced from second flow passage F2, discharges cooling treatment gas G5 as cleaned gas G9 with further reduced concentration of the organic solvent, introduces a high-temperature gas G10, desorbs the organic solvent from adsorption element 310, and discharges the high-temperature gas G10 as desorption gas G11.

Desorption gas G8 is returned to cooling condensing device 100, and desorption gas G11 is returned to first flow passage F1. There is no need for organic solvent recovery system 1C to perform treatment corresponding to the amount of air of desorption gas G11 in cooling condensing device 100 since desorption gas G11 is returned to first flow passage F1. Organic solvent recovery system 1C can thus contribute to size reduction and energy saving of cooling condensing device 100. Organic solvent recovery system 1C can curb condensation of NMP (N-methyl-2-pyrrolidone), moisture, and the like contained in cooling treatment gas G4 since the temperature of desorption gas G11 is high.

Desorption gas G8 is returned to cooling condensing device 100, and desorption gas G11 is returned to regeneration heater 250. There is no need for organic solvent recovery system 2C to perform treatment corresponding to the amount of air of desorption gas G11 in cooling condensing device 100 and first concentration device 200 since desorption gas G11 is returned to regeneration heater 250. Organic solvent recovery system 2C can thus contribute to size reduction and energy saving of cooling condensing device 100 and first concentration device 200. Organic solvent recovery system 2C can contribute to energy saving of regeneration heater 250 since the temperature of desorption gas G11 is high.

Desorption gas G8 is returned to cooling condensing device 100, and desorption gas G11 is returned to fourth flow passage F4. Desorption gas G11 flows through fourth flow passage F4 and is returned to second heat exchanger 112 along with cooling treatment gas G6. There is no need for organic solvent recovery system 3C to perform treatment corresponding to the amount of air of desorption gas G11 in cooling condensing device 100 and first concentration device 200. Organic solvent recovery system 3C can thus contribute to size reduction and energy saving of cooling condensing device 100 and first concentration device 200. Organic solvent recovery system 3C can improve the temperature of a fluid flowing through second exchanger 112 since the temperature of desorption gas G11 is high and can contribute to size reduction and energy saving of second heat exchanger 112 for cooling exhaust gas G1.

Desorption gas G8 is returned to cooling condensing device 100, and desorption gas G11 is returned to fifth flow passage F5. Desorption gas G11 flows through fifth flow passage F5 and is returned to production facility 130 along with a part of exhaust gas G1 and cooling treatment gas G6 discharged from second heat exchanger 112. There is no need for organic solvent recovery system 4C to perform treatment corresponding to the amount of air of desorption gas G11 in cooling condensing device 100 and first concentration device 200. Organic solvent recovery system 4C can thus contribute to size reduction and energy saving of cooling condensing device 100 and first concentration device 200. Organic solvent recovery system 4C can raise the temperature of exhaust gas G1 discharged again from production facility 130 since the temperature of desorption gas G11 is high. Organic solvent recovery system 4C can thus improve the temperature of a fluid flowing through second heat exchanger 112 and can contribute to size reduction and energy saving of second heat exchanger 112 for cooling exhaust gas G1.

In first concentration device 200 according to the present embodiment, the plurality of adsorption units 210 are arranged in the circumferential direction around the cylinder shaft of the rotor with the hollow columnar shape rotating about the cylinder shaft. It is thus possible to recover the organic solvent with high efficiency.

In second concentration device 300 according to the present embodiment, adsorption element 310 is arranged at the adsorption rotor with the disc shape rotating about the cylinder shaft. It is thus possible to recover the organic solvent with high efficiency.

### [Other embodiments]

In the above embodiment, two concentration devices, namely first concentration device 200 and second concentration device 300 are used. two first concentration devices 200 or two second concentration devices 300 may be applied in accordance with the amount of air. Also, three or more concentration devices may be applied in accordance with removal efficiency.

As the organic solvent contained in exhaust gas G1, an organic solvent that is liquefied though cooling at 1°C to 50°C and can be recovered is listed. Examples of the organic solvent include N-methyl-2-pyrrolidon, N-ethyl-2-pyrrolidon, N,N-dimethylformamide, N,N-dimethylacetamide, and n-decane. These are examples, and the organic solvent is not limited thereto. One kind or more kinds of the organic solvents may be contained.

### [Embodiment 1D]

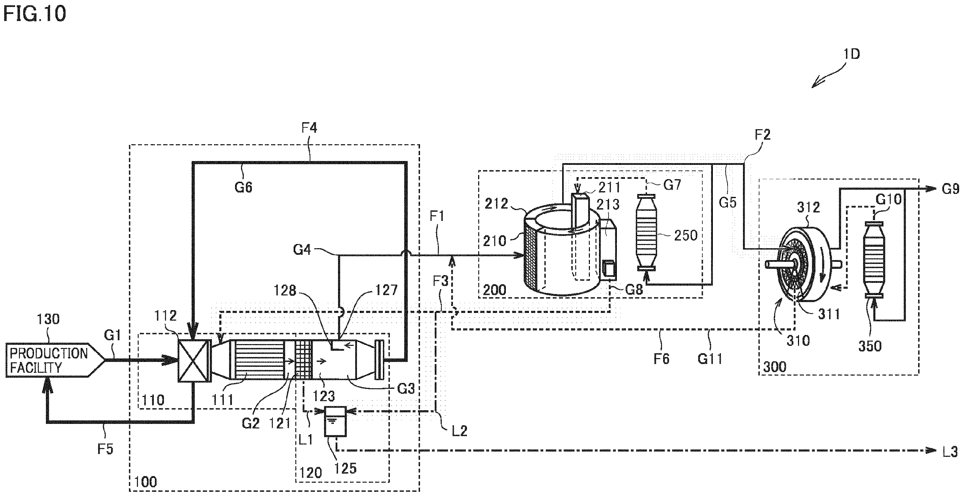

Fig. 10 is a diagram schematically illustrating a configuration of an organic solvent recovery system 1D according to an embodiment 1D. Organic solvent recovery system 1D is configured of a cooling condensing device 100, a first concentration device 200, a second concentration device 300, and various flow passages.

Cooling condensing device 100 has a cooling section 110 and a separating section 120. Exhaust gas G1 containing an organic solvent is discharged from a production facility 130. Exhaust gas G1 is cooled by passing through cooling section 110. The organic solvent is liquefied and condensed by exhaust gas G1 passing through cooling section 110.

Exhaust gas G2 that has passed through cooling section 110 is separated into a cooled condensed liquid L1 that has been liquefied and condensed and cooling treatment gas G3 with reduced concentration of the organic solvent by passing through separating section 120. A part of cooling treatment gas G3 is discharged as cooling treatment gas G4 from cooling condensing device 100 to first concentration device 200 through a chamber 123, and a remaining part is returned as cooling treatment gas G6 from cooling condensing device 100 to a second heat exchanger 112, which will be described later.

Cooling means and a configuration of cooling section 110 are not particularly limited. In embodiment 1D, a first heat exchanger 111 that performs cooling through indirect heat exchange between a refrigerant such as cooling water, cool water, or brine and the exhaust gas is used. First heat exchanger 111 is located such that exhaust gas G1 flows in a horizontal direction.

Cooling section 110 is provided with second heat exchanger 112 that cools exhaust gas G1 through heat exchange between cooling treatment gas G6 and exhaust gas G1 before first heat exchanger 111. Second heat exchanger 112 can reduce the heat transmission area and the amount of refrigerant required by first heat exchanger 111. A part of exhaust gas G1 and cooling treatment gas G6 is returned to production facility 130 through a fifth flow passage F5. Conditions such as cooling temperatures for first heat exchanger 111 and second heat exchanger 112 may be appropriately determined depending on the organic solvent as a target of recovery.

Separating means and a configuration of separating section 120 are not particularly limited. In embodiment 1D, a net-like structure 121 that brings liquid droplets into contact with net-like structure 121 and captures the liquid droplets, such as a demister, a filter, or a mesh is used. Cooled condensed liquid L1 captured by net-like structure 121 is collected in a tank 125 arranged below net-like structure 121 due to the gravity and is recovered as a recovered liquid L3.

Chamber 123 is a structure having a space with a specific capacity. A part of cooling treatment gas G3 stored in chamber 123 for a specific period of time flows as cooling treatment gas G4 through a first flow passage F1 and is supplied to first concentration device 200. A remaining part of cooling treatment gas G3 passes as cooling treatment gas G6 through a fourth flow passage F4 and is returned to second heat exchanger 112. Chamber 123 has a partitioning section 128 that enables suctioning of first flow passage F1 to face an exhaust direction of cooling treatment gas G3 discharged from net-like structure 121.

First flow passage F1 is a portion that introduces cooling treatment gas G4 from chamber 123 into first concentration device 200. A connection port of first flow passage F1 to chamber 123 is preferably a ceiling section 127 of chamber 123. It is thus possible to curb invasion of a small amount of liquid droplets that cannot be captured by separating section 120 into first concentration device 200 and to prevent degradation of performance, degradation of strength, and the like due to leakage of adsorption units 210 in first concentration device 200, which will be described later. Further preferably, it is better to take out cooling treatment gas G4 to face a ventilation direction of cooling treatment gas G3. It is thus possible to further prevent invasion of liquid droplets. In addition to this, a liquid droplet invasion preventing member that is similar to net-like structure 121 may be provided, or a heater for vaporizing the liquid droplets may be provided, at an extraction port of cooling treatment gas G4.

First concentration device 200 has an adsorption rotor 212 including an adsorption material that adsorbs the contained organic solvent by the gas coming into contact with the adsorption material and desorbs the adsorbed organic solvent by the heated gas coming into contact with the adsorption material. Adsorption rotor 212 is configured of a plurality of adsorption units 210 partitioned by a plurality of partitioning sections. Adsorption rotor 212 has a hollow columnar shape as a whole by the plurality of adsorption units 210. Adsorption rotor 212 is installed inside a treatment room and is provided such that a fluid can flow in a radial direction. Adsorption rotor 212 is provided to receive a rotation drive force of a motor and to be rotatable about a cylinder shaft.

In first concentration device 200, some of adsorption units 210 constitute an adsorption section that adsorbs the organic solvent contained in cooling treatment gas G4 supplied from the outside to the inside of adsorption units 210, and the remaining part of adsorption units 210 constitutes a desorption section that desorbs the organic solvent adsorbed by adsorption units 210 from adsorption units 210 by supplying heated air from the inside to the outside of adsorption units 210.

Cooling treatment gas G4 supplied to the treatment room is introduced from an outer circumferential surface of adsorption rotor 212 into the adsorption section for cleaning. Cooling treatment gas G4 introduced into the adsorption section is cleaned by the plurality of adsorption units 210 located at the adsorption section adsorbing the organic solvent when cooling treatment gas G4 passes through adsorption rotor 212 from the outer circumferential surface to an inner circumferential surface along the radial direction.

Cooling treatment gas G5 as a cleaned treated fluid is discharged as cleaned gas from upper portions of adsorption units 210. The discharged cleaned gas flows as cooling treatment gas G5 through second flow passage F2 and is supplied to second concentration device 300.

An inner circumference-side flow path forming member 211 and an outer circumference-side flow path forming member 213 are disposed to face each other on the inner circumference side and the outer circumference side of adsorption rotor 212 such that a part of adsorption rotor 212 in a circumferential direction is sandwiched therebetween. A region of adsorption rotor 212 sandwiched between inner circumference-side flow path forming member 211 and outer circumference-side flow path forming member 213 is the desorption section.

In order to desorb the organic solvent, high-temperature gas G7 which is a part of cooling treatment gas G5 heated by regeneration heater 250 is introduced from inner circumference-side flow path forming member 211 into the desorption section. High-temperature gas G7 introduced into the desorption section desorbs the organic solvent adsorbed by the plurality of adsorption units 210 located at the desorption section by heat from adsorption units 210 when high-temperature gas G7 passes through adsorption rotor 212. Desorption gas G8 containing the organic solvent is discharged as concentrated gas from the desorption section to the outside of the treatment room through outer circumference-side flow path forming member 213 and is returned to a third flow passage F3. A part of the organic solvent contained in desorption gas G8 is liquefied, condensed, and collected as desorbed condensed liquid L2 in tank 125.

Third flow passage F3 is a portion that returns desorption gas G8 to the introduction section of exhaust gas G1 in cooling condensing device 100. Third flow passage F3 is preferably connected such that the desorption section is arranged further upward than a meeting position of desorption gas G8 and exhaust gas G1 to be supplied to cooling condensing device 100. This arrangement facilitates transfer of desorbed condensed liquid L2 generated from desorption gas G8 in first concentration device 200 to cooling condensing device 100. It is better for third flow passage F3 to employ a configuration in which ventilation to two locations, namely the introduction section of exhaust gas G1 and tank 125 in cooling condensing device 100 is made. With this configuration, desorbed condensed liquid L2 generated from desorption gas G8 is likely to be recovered directly to tank 125.

In first concentration device 200, adsorption treatment of a treated substance is performed on adsorption units 210 located at the adsorption section, and desorption treatment of the treated substance is performed on adsorption units 210 located at the desorption section after the adsorption treatment. The adsorption treatment and the desorption treatment of the treated substance are continuously performed by adsorption rotor 212 rotating about the cylinder shaft and by adsorption units 210 alternately moving between the desorption section and the adsorption section.

As a material of the adsorption elements constituting adsorption units 210, it is possible to use activated alumina, silica gel, an activated carbon material, zeolite, or the like. The shape of the adsorption elements in adsorption units 210 is not particularly limited, and a sheet containing an activated carbon material or zeolite and formed into a honey comb shape or a laminate of an activated carbon fiber nonwoven fabric, for example, may be employed.

Second concentration device 300 has an adsorption element 310 including an adsorption material that adsorbs the contained organic solvent by gas coming into contact with the adsorption material and desorbs the adsorbed organic solvent by heated gas coming into contact with the adsorption material. Adsorption element 310 includes a desorption section (desorption zone) 311 and an adsorption section (adsorption zone) 312. In adsorption section 312, the organic solvent contained in cooling treatment gas G5 is adsorbed by the adsorption material, and cooling treatment gas G5 is cleaned and discharged as cleaned gas G9, by cooling treatment gas G5 being introduced and by cooling treatment gas G5 coming into contact with the adsorption material.

In desorption section 311, the organic solvent is desorbed from the adsorption material, and the gas is thereby discharged as desorption gas G11 containing the organic solvent, by high-temperature gas G10 at a higher temperature than cooling treatment gas G5 being introduced into the adsorption material. Desorption gas G11 is returned to first flow passage F1 through a sixth flow passage F6.

Since desorption gas G11 is returned to first flow passage F1 in organic solvent recovery system 1D, there is no need to perform treatment corresponding to the amount of air of desorption gas G11 in cooling condensing device 100. Organic solvent recovery system 1D can thus contribute to size reduction and energy saving of cooling condensing device 100. Organic solvent recovery system 1D can curb condensation of NMP (N-methyl-2-pyrrolidone), moisture, and the like contained in cooling treatment gas G4 since the temperature of desorption gas G11 is high.

As the adsorption material contained in adsorption element 310, activated alumina, silica gel, an activated carbon material, and zeolite have widely been used, and among these, activated carbon and hydrophobic zeolite have been particularly suitably used.

As illustrated in Fig. 10, second concentration device 300 includes a rotation shaft and adsorption element 310 provided around the rotation shaft. Second concentration device 300 has a configuration in which the adsorption material that has adsorbed the organic solvent in cooling treatment gas G5 introduced from second flow passage F2 continuously moves to desorption section 311 in adsorption section 312 by causing adsorption element 310 to rotate about the rotation shaft.

Second concentration device 300 may have a cleaning section (purge section) to which a part on which desorption processing has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by cleaned gas G9 cleaning the adsorption material on which desorption has been completed.

High-temperature gas G10 used for the desorption is preferably obtained by bringing a part of cleaned gas G9 into a high-temperature state by using heating means such as a regeneration heater 350. It is possible to curb an increase in the amount of treatment air for the gas containing the organic solvent in adsorption section 312.

### [Embodiment 2D]

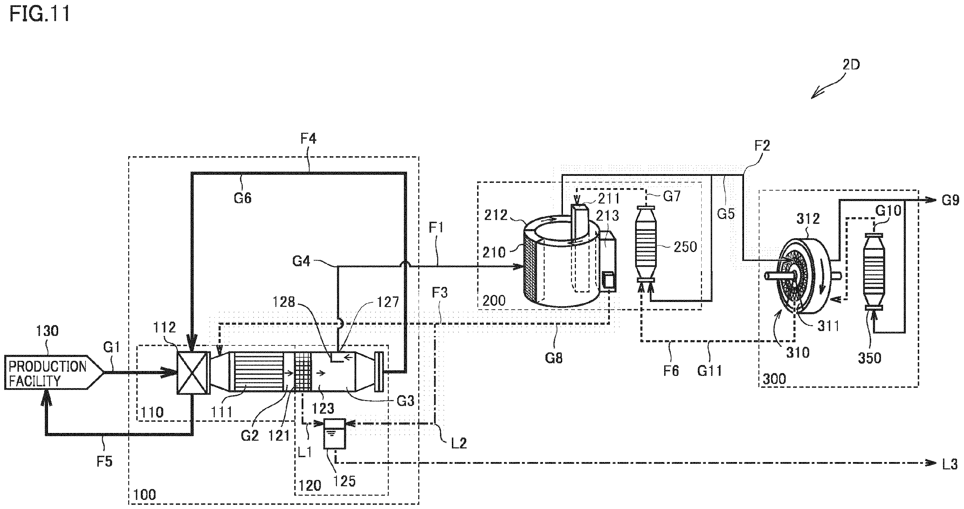

Fig. 11 is a diagram schematically illustrating a configuration of an organic solvent recovery system 2D according to an embodiment 2D. Organic solvent recovery system 2D is configured of a cooling condensing device 100, a first concentration device 200, a second concentration device 300, and various flow passages. Organic solvent recovery system 2D is the same as organic solvent recovery system 1D according to embodiment 1D in regard to configurations other than that desorption gas G11 in second concentration device 300 is returned to a regeneration heater 250 through a sixth flow passage F6.

There is no need for organic solvent recovery system 2D to perform treatment corresponding to the amount of air of desorption gas G11 in cooling condensing device 100 and first concentration device 200 since desorption gas G11 is returned to regeneration heater 250. Organic solvent recovery system 2D can thus contribute to size reduction and energy saving of cooling condensing device 100 and first concentration device 200. Organic solvent recovery system 2D can contribute to energy saving of regeneration heater 250 since the temperature of desorption gas G11 is high.

### [Embodiment 3D]

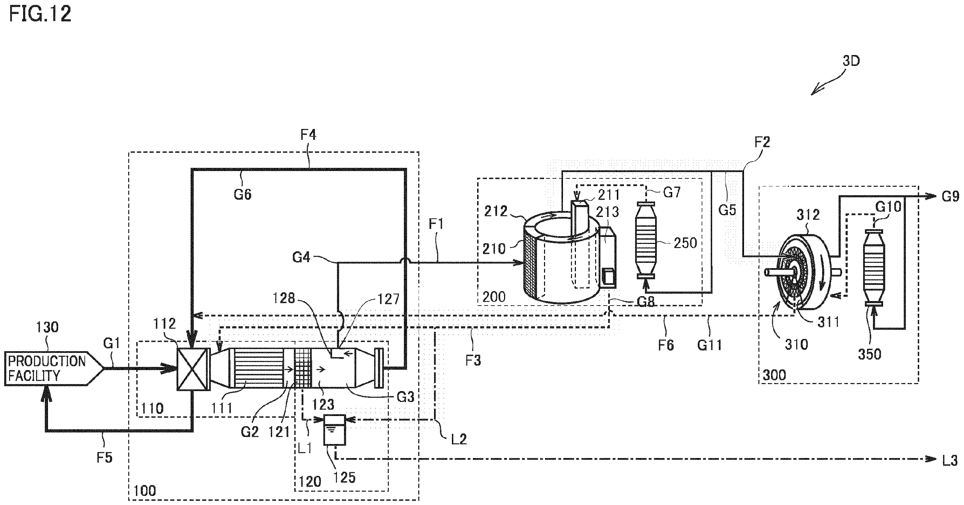

Fig. 12 is a diagram schematically illustrating a configuration of organic solvent recovery system 3D according to an embodiment 3D. Organic solvent recovery system 3D is configured of a cooling condensing device 100, a first concentration device 200, a second concentration device 300, and various flow passages. In organic solvent recovery system 3D, desorption gas G11 in second concentration device 300 is returned to a fourth flow passage F4 through a sixth flow passage F6. Organic solvent recovery system 3D is the same as organic solvent recovery system 1D according to embodiment 1D in regard to configurations other than that desorption gas G11 in second concentration device 300 is returned to fourth flow passage F4 through sixth flow passage F6.

Desorption gas G11 that has passed through sixth flow passage F6 flows through fourth flow passage F4 and is returned to a second heat exchanger 112 along with cooling treatment gas G6 discharged from cooling condensing device 100. There is no need for organic solvent recovery system 3D to perform treatment corresponding to the amount of air of desorption gas G11 in cooling condensing device 100 and first concentration device 200. Organic solvent recovery system 3D can thus contribute to size reduction and energy saving of cooling condensing device 100 and first concentration device 200. Organic solvent recovery system 3D can improve the temperature of a fluid passing through second heat exchanger 112 since the temperature of desorption gas G11 is high and can contribute to size reduction and energy saving of second heat exchanger 112 for cooling exhaust gas G1.

### [Embodiment 4D]

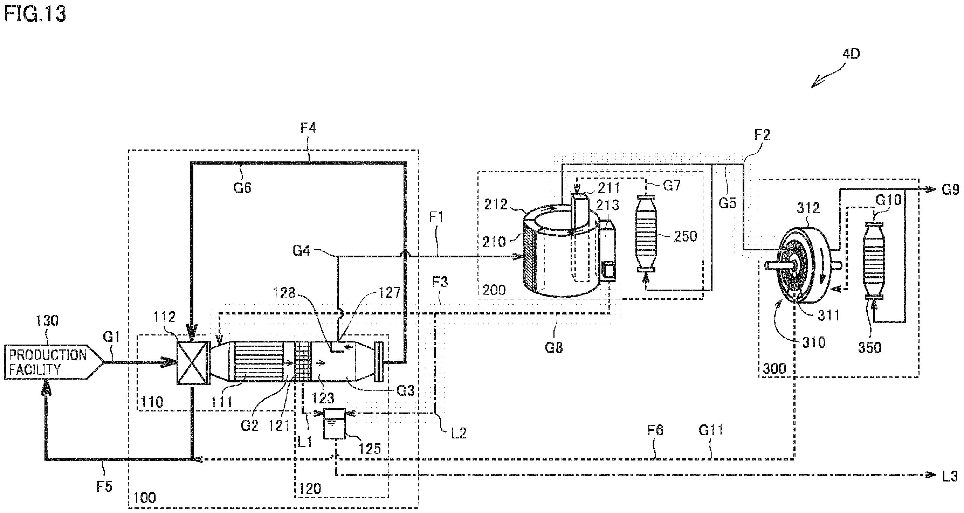

Fig. 13 is a diagram schematically illustrating a configuration of an organic solvent recovery system 4D according to an embodiment 4D. Organic solvent recovery system 4D is configured of a cooling condensing device 100, a first concentration device 200, a second concentration device 300, and various flow passages. In organic solvent recovery system 4D, desorption gas G11 in second concentration device 300 is returned to a fifth flow passage F5 through a sixth flow passage F6. Organic solvent recovery system 4D is the same as organic solvent recovery system 1D according to embodiment 1D in regard to configurations other than that desorption gas G11 in second concentration device 300 is returned to fifth flow passage F5 through sixth flow passage F6.

Desorption gas G11 that has passed through sixth flow passage F6 passes through fifth flow passage F5 along with a part of exhaust gas G1 and cooling treatment gas G6 discharged from a second heat exchanger 112 and is returned to a production facility 130. There is no need for organic solvent recovery system 4D to perform treatment corresponding to the amount of air of desorption gas G11 in cooling condensing device 100 and first concentration device 200. Organic solvent recovery system 4D can thus contribute to size reduction and energy saving of cooling condensing device 100 and first concentration device 200. Organic solvent recovery system 4D can raise the temperature of exhaust gas G1 discharged again from production facility 130 since the temperature of desorption gas G11 is high. Organic solvent recovery system 4D can thus improve the temperature of a fluid flowing through second heat exchanger 112 and can contribute to size reduction and energy saving of second heat exchanger 112 for cooling exhaust gas G1.

### [Effects and advantages]

Organic solvent recovery system 1D according to the present embodiment includes cooling condensing device 100 that liquefies and condenses the organic solvent by cooling exhaust gas G1 containing the organic solvent and discharges the gas as cooling treatment gas G4 with reduced concentration of the organic solvent, first flow passage F1 that causes a part of cooling treatment gas G4 to pass therethrough, first concentration device 200 that adsorbs, by adsorption units 210, the organic solvent contained in cooling treatment gas G4 introduced from first flow passage F1, discharges cooling treatment gas G4 as cooling treatment gas G5 with further reduced concentration of the organic solvent, introduces high-temperature gas G7, desorbs the organic solvent from adsorption units 210, and discharges the high-temperature gas G7 as desorption gas G8, a second flow passage F2 that causes cooling treatment gas G5 to pass therethrough, and second concentration device 300 that adsorbs, by adsorption element 310, the organic solvent contained in cooling treatment gas G5 introduced from second flow passage F2, discharges cooling treatment gas G5 as cleaned gas G9 with further reduced concentration of the organic solvent, introduces high-temperature gas G10, desorbs the organic solvent from adsorption element 310, and discharges high-temperature gas G10 as desorption gas G11.

Cooling condensing device 100 includes second heat exchanger 112 that cools exhaust gas G1 through heat exchange with a refrigerant. Organic solvent recovery system 1D further includes fourth flow passage F4 that returns cooling treatment gas G6 as a remaining part of the cooling treatment gas except for a part of cooling treatment gas G4 to second heat exchanger 112. Desorption gas G8 is returned to cooling condensing device 100, and desorption gas G11 is returned to first flow passage F1. There is no need for organic solvent recovery system 1D to perform treatment corresponding to the amount of air of desorption gas G11 in cooling condensing device 100 since desorption gas G11 is returned to first flow passage F1. Organic solvent recovery system 1D can thus contribute to size reduction and energy saving of cooling condensing device 100. Organic solvent recovery system 1D can curb condensation of NMP (N-methyl-2-pyrrolidone), moisture, and the like contained in cooling treatment gas 4 since the temperature of desorption gas G11 is high.

Desorption gas G8 is returned to cooling condensing device 100, and desorption gas G11 is returned to regeneration heater 250. There is no need for organic solvent recovery system 2D to perform treatment corresponding to the amount of air of desorption gas G11 in cooling condensing device 100 and first concentration device 200 since desorption gas G11 is returned to regeneration heater 250. Organic solvent recovery system 2D can thus contribute to size reduction and energy saving of cooling condensing device 100 and first concentration device 200. Organic solvent recovery system 2D can contribute to energy saving of regeneration heater 250 since the temperature of desorption gas G11 is high.

Desorption gas G8 is returned to cooling condensing device 100, and desorption gas G11 is returned to fourth flow passage F4. Desorption gas G11 flows through fourth flow passage F4 and is returned to second heat exchanger 112 along with cooling treatment gas G6. There is no need for organic solvent recovery system 3D to perform treatment corresponding to the amount of air of desorption gas G11 in cooling condensing device 100 and first concentration device 200. Organic solvent recovery system 3D can thus contribute to size reduction and energy saving of cooling condensing device 100 and first concentration device 200. Organic solvent recovery system 3D can improve the temperature of a fluid flowing through second heat exchanger 112 since the temperature of desorption gas G11 is high and can contribute to size reduction and energy saving of second heat exchanger 112 for cooling exhaust gas G1.

Desorption gas G8 is returned to cooling condensing device 100, and desorption gas G11 is returned to fifth flow passage F5. Desorption gas G11 flows through fifth flow passage F5 and is returned to production facility 130 along with a part of exhaust gas G1 and cooling treatment gas G6 discharged from second heat exchanger 112. There is no need for organic solvent recovery system 4D to perform treatment corresponding to the amount of air of desorption gas G11 in cooling condensing device 100 and first concentration device 200. Organic solvent recovery system 4D can thus contribute to size reduction and energy saving of cooling condensing device 100 and first concentration device 200. Organic solvent recovery system 4D can raise the temperature of exhaust gas G1 discharged again from production facility 130 since the temperature of desorption gas G11 is high. Organic solvent recovery system 4D can thus improve the temperature of a fluid flowing through second heat exchanger 112 and can contribute to size reduction and energy saving of second heat exchanger 112 for cooling exhaust gas G1.

In first concentration device 200 according to the present embodiment, the plurality of adsorption units 210 are arranged in the circumferential direction around a cylinder shaft of a rotor with a hollow columnar shape rotating about the cylinder shaft. It is thus possible to recover the organic solvent with high efficiency.

In second concentration device 300 according to the present embodiment, adsorption element 310 is arranged at an adsorption rotor with a disc shape rotating about a cylinder shaft. It is thus possible to recover the organic solvent with high efficiency.

### [Other embodiments]

In the above embodiment, two concentration devices, namely first concentration device 200 and second concentration device 300 are used. As the concentration devices, two first concentration devices 200 or two second concentration devices 300 may be applied in accordance with the amount of air. Also, three or more concentration devices may be applied in accordance with removal efficiency.

As the organic solvent contained in exhaust gas G1, an organic solvent that is liquefied though cooling at 1°C to 50°C and can be recovered is listed. Examples of the organic solvent include N-methyl-2-pyrrolidon, N-ethyl-2-pyrrolidon, N,N-dimethylformamide, N,N-dimethylacetamide, and n-decane. These are examples, and the organic solvent is not limited thereto. One kind or more kinds of the organic solvents may be contained.

### [Embodiment 1E]

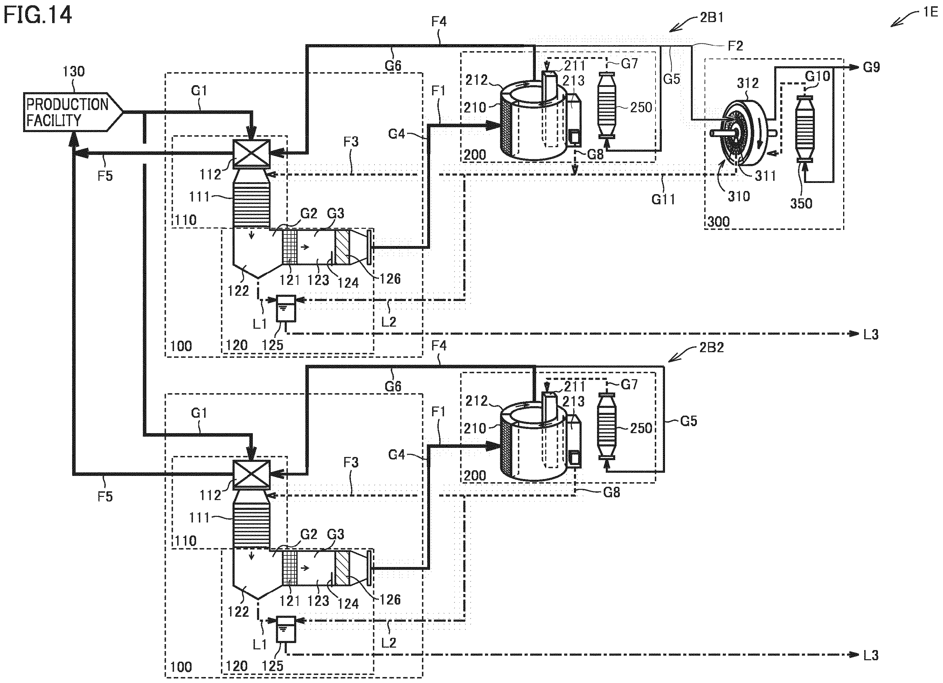

Fig. 14 is a diagram schematically illustrating a configuration of an organic solvent recovery system 1E according to an embodiment 1E. Organic solvent recovery system 1E is configured of an organic solvent recovery system 2B 1 configured of a cooling condensing device 100, a first concentration device 200, and a second concentration device 300, an organic solvent recovery system 2B2 configured of cooling condensing device 100 and first concentration device 200, and various flow passages.

Organic solvent recovery system 2B 1 has a configuration that is similar to that in aforementioned embodiment 2B. Organic solvent recovery system 2B2 has a configuration obtained by deleting second concentration device 300 from aforementioned embodiment 2B. As illustrated in Fig. 14, the number of second concentration devices 300 in a later stage is one while the number of first concentration devices 200 in an earlier stage is two in organic solvent recovery system 1E according to embodiment 1E. In other words, a configuration in which the number of second concentration devices 300 in the later stage is less than the number of first concentration devices 200 in the earlier stage is employed.

Organic solvent recovery system 1E according to embodiment 1E has a configuration in which a plurality of cooling condensing devices 100 and a plurality of first concentration devices 200 are arranged in parallel with respect to a production facility 130 as illustrated in Fig. 14. Although the number of first concentration devices 200 is the same as the number of cooling condensing devices 100 in organic solvent recovery system 1E according to embodiment 1E, the numbers may be different from each other. Hereinafter, various configurations of organic solvent recovery system 1E including organic solvent recovery system 2B1 and organic solvent recovery system 2B2 will be specifically described.

Each cooling condensing device 100 has a cooling section 110 and a separating section 120. Exhaust gas G1 containing an organic solvent is discharged from production facility 130. Exhaust gas G1 is cooled by passing through cooling section 110. The organic solvent is liquefied and condensed by exhaust gas G1 passing through cooling section 110.

Exhaust gas G2 that has passed through cooling section 110 is separated into a cooled condensed liquid L1 that has been liquefied and condensed and cooling treatment gas G3 with reduced concentration of the organic solvent by passing through separating section 120. A heater 126 is provided inside a chamber 123. Heter 126 slightly heats cooling treatment gas G3 after cooling. Cooling treatment gas G3 can prevent condensation of the organic solvent or moisture by being slightly heated. Cooling treatment gas G3 is discharged as cooling treatment gas G4 from cooling condensing device 100 to first concentration device 200 through chamber 123.

Cooling means and a configuration of cooling section 110 are not particularly limited. In embodiment 1E, a first heat exchanger 111 that performs cooling through indirect heat exchange between a refrigerant such as cooling water, cool water, or brine and the exhaust gas is used. First heat exchanger 111 is located such that exhaust gas G1 flows in an up-down direction.

Cooling section 110 is provided with a second heat exchanger 112 that cools exhaust gas G1 through heat exchange between cooling treatment gas G6, which will be described later, and exhaust gas G1 before first heat exchanger 111. Second heat exchanger 112 can reduce the heat transmission area and the amount of refrigerant required by first heat exchanger 111. A part of exhaust gas G1 and cooling treatment gas G6 is returned to production facility 130 through a fifth flow passage F5. Conditions such as cooling temperatures for first heat exchanger 111 and second heat exchanger 112 may be appropriately determined depending on the organic solvent as a target of recovery.

Separating means and a configuration of separating section 120 are not particularly limited. In embodiment 1E, a net-like structure 121 that brings liquid droplets into contact with net-like structure 121 and captures the liquid droplets, such as a demister, a filter, or a mesh is used. Separating section 120 has a receiving section 122 with a funnel shape that receives cooled condensed liquid L1 cooled by cooling section 110 and containing the organic solvent. Cooled condensed liquid L1 cooled by cooling section 110 and cooled condensed liquid L1 captured by net-like structure 121 flow into receiving section 122 due to the gravity, are then collected in a tank 125 arranged below receiving section 122, and are recovered as a recovered liquid L3.

Chamber 123 is a structure having a space with a specific capacity. A dam 124 is provided inside chamber 123. Dam 124 prevents a part of cooled condensed liquid L1 from moving to a distal end direction of chamber 123 and flowing into a first flow passage F1 as a cooling gas flow passage. Dam 124 works to reliably recover cooled condensed liquid L1. Cooling treatment gas G3 stored inside chamber 123 for a specific period of time flows as cooling treatment gas G4 through first flow passage F1 and is supplied to first concentration device 200.

Organic solvent recovery system 1E has a structure in which exhaust gas G1 (exhaust gas G2, cooling treatment gas G3) flows in an L-shaped direction by a flowing direction from net-like structure 121 to chamber 123 inside separating section 120 intersecting a flowing direction from cooling section 110 to separating section 120 when seen along a direction in which exhaust gas G1 flows.

Since a location configured of cooling section 110 and separating section 120 has an L-shaped structure, organic solvent recovery system 1E can curb exposure of first concentration device 200 and second concentration device 300 due to liquid droplets and splash. If first concentration device 200 and second concentration device 300 are exposed and an adsorbent gets wet, degradation of strength or damage may occur. Organic solvent recovery system 1E can prevent degradation of strength and damage of first concentration device 200 and second concentration device 300 by having the L-shaped structure.

First concentration device 200 has an adsorption rotor 212 including an adsorption material that adsorbs the contained organic solvent by the gas coming into contact with the adsorption material and desorbs the adsorbed organic solvent by the heated gas coming into contact with the adsorption material. Adsorption rotor 212 is configured of a plurality of adsorption units 210 partitioned by a plurality of partitioning sections. Adsorption rotor 212 has a hollow columnar shape as a whole by the plurality of adsorption units 210. Adsorption rotor 212 is installed inside a treatment room and is provided such that a fluid can flow in a radial direction. Adsorption rotor 212 is provided to receive a rotation drive force of a motor and to be rotatable about a cylinder shaft.

In first concentration device 200, some of adsorption units 210 constitute an adsorption section that adsorbs the organic solvent contained in cooling treatment gas G4 supplied from the outside to the inside of adsorption units 210, and the remaining part of adsorption units 210 constitutes a desorption section that desorbs the organic solvent adsorbed by adsorption units 210 from adsorption units 210 by supplying heated air from the inside to the outside of adsorption units 210.

Cooling treatment gas G4 supplied to the treatment room is introduced from an outer circumferential surface of adsorption rotor 212 into the adsorption section for cleaning. Cooling treatment gas G4 introduced into the adsorption section is cleaned by the plurality of adsorption units 210 located at the adsorption section adsorbing the organic solvent when cooling treatment gas G4 passes through adsorption rotor 212 from the outer circumferential surface to an inner circumferential surface along a radial direction.

Cooling treatment gas G5 and G6 as cleaned treated fluids is discharged as cleaned gas from upper portions of adsorption units 210 in organic solvent recovery system 2B1. A part of the discharged cleaned gas flows as cooling treatment gas G5 through a second flow passage F2 and is supplied to second concentration device 300. A part of discharged cleaned gas flows as cooling treatment gas G6 through a fourth flow passage F4 and is returned to second heat exchanger 112. In organic solvent recovery system 2B2, cooling treatment gas G5 as the cleaned treated fluid is discharged as cleaned gas from the upper portions of adsorption units 210.

An inner circumference-side flow path forming member 211 and an outer circumference-side flow path forming member 213 are disposed to face each other on the inner circumference side and the outer circumference side of adsorption rotor 212 such that a part of adsorption rotor 212 in a circumferential direction is sandwiched therebetween. A region of adsorption rotor 212 sandwiched between inner circumference-side flow path forming member 211 and outer circumference-side flow path forming member 213 is the desorption section.

In order to desorb the organic solvent, high-temperature gas G7 which is a part of cooling treatment gas G5 heated by a regeneration heater 250 is introduced from inner circumference-side flow path forming member 211 into the desorption section. High-temperature gas G7 introduced into the desorption section desorbs the organic solvent adsorbed by the plurality of adsorption units 210 located at the desorption section by heat from adsorption units 210 when high-temperature gas G7 passes through adsorption rotor 212. Desorption gas G8 containing the organic solvent is discharged as concentrated gas from the desorption section to the outside of the treatment room through outer circumference-side flow path forming member 213 and is returned to a third flow passage F3. A part of the organic solvent contained in desorption gas G8 is liquefied, condensed, and collected as a desorbed condensed liquid L2 in tank 125.

In organic solvent recovery system 2B1, a third flow passage F3 is a portion that returns desorption gas G8 and desorption gas G11, which will be described later, to the introduction section of exhaust gas G1 in cooling condensing device 100. Third flow passage F3 is preferably connected such that the desorption section is arranged further upward than a meeting position of desorption gas and exhaust gas G1 to be supplied to cooling condensing device 100. This is because desorbed condensed liquid L2 generated from desorption gas G8 in first concentration device 200 and desorption gas G11 in second concentration device 300 is likely to be transferred to cooling condensing device 100. It is better for third flow passage F3 to employ a configuration in which ventilation to two locations, namely the introduction section of exhaust gas G1 and tank 125 in cooling condensing device 100 is made. This is because desorbed condensed liquid L2 generated from desorption gas G8 and desorption gas G11 is likely to be collected directly to tank 125. In organic solvent recovery system 2B2, third flow passage F3 is a portion that returns desorption gas G8 to the introduction section of exhaust gas G1 in cooling condensing device 100.

In first concentration device 200, adsorption treatment of a treated substance is performed on adsorption units 210 located at the adsorption section, and desorption treatment of the treated substance is performed on adsorption units 210 located at the desorption section after the adsorption treatment. The adsorption treatment and the desorption treatment of the treated substance are continuously performed by adsorption rotor 212 rotating about the cylinder shaft and by adsorption units 210 alternately moving between the desorption section and the adsorption section.

As a material of the adsorption elements constituting adsorption units 210, it is possible to use activated alumina, silica gel, an activated carbon material, zeolite, or the like. The shape of the adsorption elements in adsorption units 210 is not particularly limited, and a sheet containing an activated carbon material or zeolite and formed into a honey comb shape or a laminate of an activated carbon fiber nonwoven fabric, for example, may be employed.

Second concentration device 300 has an adsorption element 310 including an adsorption material that adsorbs the contained organic solvent by gas coming into contact with the adsorption material and desorbs the adsorbed organic solvent by heated gas coming into contact with the adsorption material. Adsorption element 310 includes a desorption section (desorption zone) 311 and an adsorption section (adsorption zone) 312. In adsorption section 312, the organic solvent contained in cooling treatment gas G5 is adsorbed by the adsorption material, and cooling treatment gas G5 is cleaned and discharged as cleaned gas G9, by cooling treatment gas G5 being introduced and by cooling treatment gas G5 coming into contact with the adsorption material.

In desorption section 311, the organic solvent is desorbed from the adsorption material, and the gas is thereby discharged as desorption gas G11 containing the organic solvent, by high-temperature gas G10 at a higher temperature than cooling treatment gas G5 being introduced into the adsorption material.

As the adsorption material contained in adsorption element 310, activated alumina, silica gel, an activated carbon material, and zeolite have widely been used, and among these, activated carbon and hydrophobic zeolite have been particularly suitably used.

As illustrated in Fig. 14, second concentration device 300 includes a rotation shaft and adsorption element 310 provided around the rotation shaft. Second concentration device 300 has a configuration in which the adsorption material that has adsorbed the organic solvent in cooling treatment gas G5 introduced from second flow passage F2 continuously moves to desorption section 311 in adsorption section 312 by causing adsorption element 310 to rotate about the rotation shaft.

As illustrated in Fig. 14, desorption section 311 is preferably arranged further downward than adsorption section 312 in second concentration device 300. This is because desorbed condensed liquid L2 is unlikely to adhere to adsorption section 312 even in a case where a part of the organic solvent contained in desorption gas G11 is liquefied and condensed and desorbed condensed liquid L2 is generated. Desorbed condensed liquid L2 drops downward from desorption section 311, follows an inner surface of the exterior of the desorption section, and is recovered. More preferably, it is better to incline desorption section 311 downward to facilitate downward dropping of desorbed condensed liquid L2.

Second concentration device 300 may have a cleaning section (purge section) to which a part on which desorption processing has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by cleaned gas G9 cleaning the adsorption material on which desorption has been completed.

High-temperature gas G10 used for the desorption is preferably obtained by bringing a part of cleaned gas G9 into a high-temperature state by using heating means such as a regeneration heater 350. This is because the amount of treatment air for the gas containing the organic solvent does not increase in adsorption section 312.

### [Embodiment 2E]

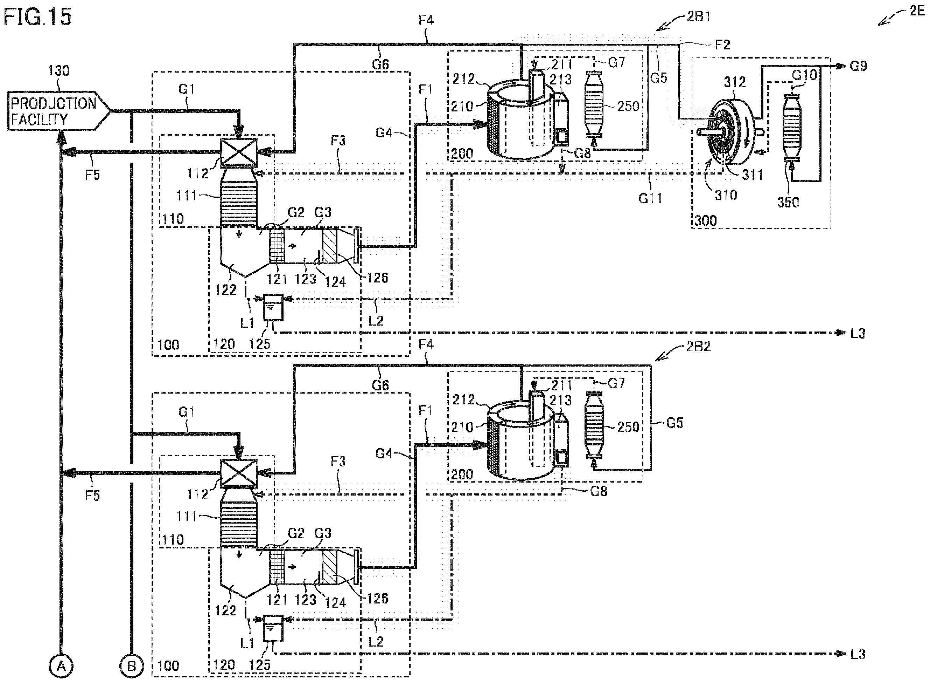

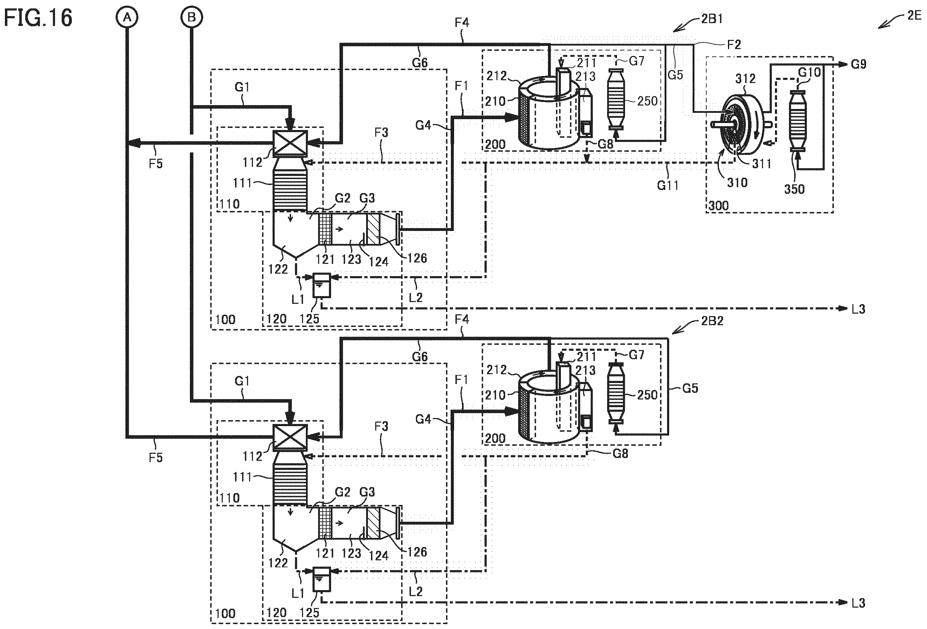

Figs. 15 and 16 are diagrams schematically illustrating a configuration of an organic solvent recovery system 2E according to an embodiment 2E. Organic solvent recovery system 2E has a configuration including two organic solvent recovery systems 2B1, each of which includes a cooling condensing device 100, a first concentration device 200, and a second concentration device 300, two organic solvent recovery systems 2B2, each of which includes cooling condensing device 100 and first concentration device 200, and various flow passages. Although flow paths are connected at a point A and a point B in Figs. 15 and 16, one diagram is illustrated in a divided manner in two diagrams due to space limitations.

Organic solvent recovery systems 2B1 and organic solvent recovery systems 2B2 in organic solvent recovery system 2E illustrated in Figs. 15 and 16 have the same configurations as those of organic solvent recovery system 2B1 and organic solvent recovery system 2B2 included in organic solvent recovery system 1E illustrated in Fig. 14.

As illustrated in Figs. 15 and 16, organic solvent recovery system 2E according to embodiment 2E has a configuration in which the number of second concentration devices 300 in a later stage is less than the number of first concentration devices 200 in an earlier stage. Specifically, the number of second concentration devices 300 in the later stage is two while the number of first concentration devices 200 in the earlier stage is four. Note that the numbers of first concentration devices 200 and second concentration devices 300 may be any numbers as long as the configuration in which the number of second concentration devices 300 in the later stage is less than the number of first concentration devices 200 in the earlier stage is employed. Positions to which second concentration devices 300 in the later stage are connected may be any positions from among a plurality of first concentration devices 200 in the earlier stage.

Organic solvent recovery system 2E according to embodiment 2E has a configuration in which a plurality of cooling condensing devices 100 and the plurality of first concentration devices 200 are arranged in parallel with respect to a production facility 130 as illustrated in Figs. 15 and 16. Although the number of first concentration devices 200 is the same as the number of cooling condensing devices 100 in organic solvent recovery system 2E according to embodiment 2E, the numbers may be different from each other. For example, a configuration in which the number of cooling condensing devices 100 is less than the number of first concentration devices 200 may be employed. In this case, a configuration in which cooling treatment gas G4 discharged from one cooling condensing device 100 flows into the plurality of first concentration devices 200 may be employed.

### [Effects and advantages]

Each of organic solvent recovery systems 1E and 2E according to the present embodiment includes cooling condensing devices 100 that liquefy and condense the organic solvent by cooling exhaust gas G1 containing the organic solvent and discharge the exhaust gas G1 as cooling treatment gas G4 with reduced concentration of the organic solvent, first flow passage F 1 that causes cooling treatment gas G4 to pass therethrough, first concentration devices 200 that adsorb, by adsorption units 210, the organic solvent contained in cooling treatment gas G4 introduced from first flow passage F 1, discharge cooling treatment gas G4 as cooling treatment gas G5 with further reduced concentration of the organic solvent, introduce high-temperature gas G7, desorb the organic solvent from adsorption units 210, and discharge high-temperature gas G7 as desorption gas G8, second flow passage F2 that causes a part of cooling treatment gas G5 to pass therethrough, and second concentration device 300 that adsorbs, by adsorption element 310, the organic solvent contained in cooling treatment gas G5 introduced from second flow passage F2, discharges cooling treatment gas G5 as cleaned gas G9 with further reduced concentration of the organic solvent, introduces high-temperature gas G10, desorbs the organic solvent from adsorption element 310, and discharges high-temperature gas G10 as desorption gas G11. The number of first concentration devices 200 provided is at least two or more, the number of second concentration devices 300 provided is at least one or more, and the number of second concentration devices 300 is less than the number of first concentration devices 200.

Therefore, organic solvent recovery systems 1E and 2E can recover the organic solvent from exhaust gas G1 with high efficiency by the plurality of first concentration devices 200 even in a case where the flow amount of exhaust gas G1 discharged from production facility 130 is large.

The plurality of first concentration devices 200 according to the present embodiment are arranged in parallel with respect to production facility 130. It is thus possible to recover the organic solvent from exhaust gas G1 with high efficiency even in a case where the flow amount of exhaust gas G1 discharged from production facility 130 is large.

The number of cooling condensing devices 100 provided in the present embodiment is at least two, and the number of first concentration devices 200 is the same as the number of cooling condensing devices 100. It is thus possible to recover the organic solvent from exhaust gas G1 with high efficiency even in a case where the flow amount of exhaust gas discharged from production facility 130 is large.

Cooling condensing device 100 according to the present embodiment further includes net-like structure 121 that separates the condensed organic solvent and cooling treatment gas G3 by bringing exhaust gas G2 after cooling into contact with net-like structure 121 and chamber 123 that stores cooling treatment gas G3 that has passed through net-like structure 121 for a specific period of time. It is thus possible to recover the organic solvent from exhaust gas G1 with high efficiency.

Cooling condensing device 100 according to the present embodiment further includes first heat exchanger 111 and second heat exchanger 112 that performs cooling through heat exchange with the refrigerant. It is thus possible to effectively perform heat exchange between the refrigerant and the exhaust gas.

In first concentration device 200 according to the present embodiment, the plurality of adsorption units 210 are arranged in the circumferential direction around the cylinder shaft of the rotor with the hollow columnar shape rotating about the cylinder shaft. It is thus possible to recover the organic solvent with high efficiency.

In second concentration device 300 according to the present embodiment, adsorption element 310 is arranged at the adsorption rotor with the disc shape rotating about the cylinder shaft. It is thus possible to recover the organic solvent with high efficiency.

### [Other embodiments]

Organic solvent recovery systems 1E and 2E in the above embodiments may be configured of any of the organic solvent recovery systems illustrated in Figs. 2 to 13 or combinations thereof.

The numbers of first concentration devices 200 and second concentration devices 300 may be any number as long as a configuration in which the number of second concentration devices 300 in the later stage is less than the number of first concentration devices 200 in the earlier stage is employed. For example, the number of second concentration devices 300 in the later stage may be one, while the number of first concentration devices 200 in the earlier stage may be three or more. However, one or more second concentration devices 300 are needed to discharge cleaned gas G9.

As the organic solvent contained in exhaust gas G1, an organic solvent that is liquefied though cooling at 1°C to 50°C and can be recovered is listed. Examples of the organic solvent include N-methyl-2-pyrrolidon, N-ethyl-2-pyrrolidon, N,N-dimethylformamide, N,N-dimethylacetamide, and n-decane. These are examples, and the organic solvent is not limited thereto. One kind or more kinds of the organic solvents may be contained.

First concentration device 200 which is a concentration device of an upright cylinder type and second concentration device 300 which is a concentration device of a disc type have been explained as examples of the concentration devices used in organic solvent recovery systems 1E and 2E. Concentration devices of a sideways cylinder type may be used as the concentration devices, or the concentration devices may be configured of a combination of any of a concentration device of an upright cylinder type, a concentration device of a sideways cylinder type, and a concentration device of a disc type. Note that the concentration device of the sideways cylinder type may be applied to the concentration device illustrated in any of Figs. 1 to 13.

Examples of the concentration device of the sideways cylinder type include those in WO 2016/189958 and WO 2017/170207. Also, examples of the concentration device of the upright cylinder type include one in Japanese Patent Laying-Open No. 63-84616. Moreover, examples of the concentration device of the disc type include one in Japanese Patent Laying-Open No. 61-167430. All of these are examples, and the concentration devices are not limited to the concentration devices disclosed in the literatures described here.

### [Embodiment 1J]

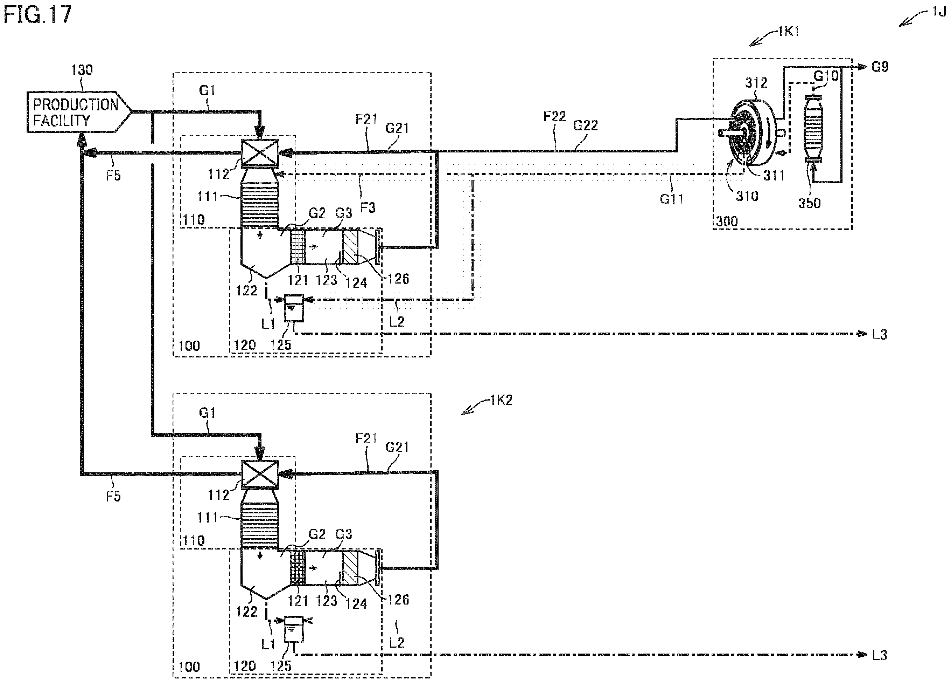

Fig. 17 is a diagram schematically illustrating a configuration of an organic solvent recovery system 1J according to an embodiment 1J. Organic solvent recovery system 1J is configured of an organic solvent recovery system 1K1 that is configured of a cooling condensing device 100 and a second concentration device 300, an organic solvent recovery system 1K2 that is configured of cooling condensing device 100, and various flow passages.

Organic solvent recovery system 1J has a configuration obtained by eliminating first concentration device 200 from organic solvent recovery system 1E in Fig. 14. As illustrated in Fig. 17, the number of second concentration devices 300 in a later stage is one, and the number of cooling condensing devices 100 in an earlier stage is two, in organic solvent recovery system 1J according to embodiment 1J. In other words, a configuration in which the number of second concentration devices 300 in the later stage is less than the number of cooling condensing devices 100 in the earlier stage is employed.

Organic solvent recovery system 1J according to embodiment 1J has a configuration in which a plurality of cooling condensing devices 100 are arranged in parallel with respect to a production facility 130 as illustrated in Fig. 17. Hereinafter, various configurations of organic solvent recovery system 1J including organic solvent recovery system 1K1 and organic solvent recovery system 1K2 will be specifically described.

Cooling condensing devices 100 used in organic solvent recovery system 1K1 and organic solvent recovery system 1K2 will be described. Each cooling condensing device 100 has a cooling section 110 and a separating section 120. Exhaust gas G1 containing an organic solvent is discharged from production facility 130. Exhaust gas G1 is cooled by passing through cooling section 110. The organic solvent is liquefied and condensed by exhaust gas G1 passing through cooling section 110.

Exhaust gas G2 that has passed through cooling section 110 is separated into a cooled condensed liquid L1 that has been liquefied and condensed and cooling treatment gas G3 with reduced concentration of the organic solvent by passing through separating section 120. A heater 126 is provided inside a chamber 123. Heater 126 slightly heats cooling treatment gas G3 after cooling. Cooling treatment gas G3 can prevent condensation of the organic solvent or moisture by being slightly heated. As for cooling treatment gas G3, a part G22 of the cooling treatment gas is discharged from cooling condensing device 100 to second concentration device 300 through chamber 123.

Cooling means and a configuration of cooling section 110 are not particularly limited. In embodiment 1J, a first heat exchanger 111 that performs cooling through indirect heat exchange between a refrigerant such as cooling water, cool water, or brine and the exhaust gas is used. First heat exchanger 111 is located such that exhaust gas G1 flows in an up-down direction.

Cooling section 110 is provided with a second heat exchanger 112 that cools exhaust gas G1 through heat exchange between cooling treatment gas G21, which will be described later, and exhaust gas G1 before first heat exchanger 111. Second heat exchanger 112 can reduce the heat transmission area and the amount of refrigerant required by first heat exchanger 111. A part of exhaust gas G1 and cooling treatment gas G21 is returned to production facility 130 through a fifth flow passage F5. Conditions such as cooling temperatures for first heat exchanger 111 and second heat exchanger 112 may be appropriately determined depending on the organic solvent as a target of recovery.

Separating means and a configuration of separating section 120 are not particularly limited. In embodiment 1J, a net-like structure 121 that brings liquid droplets into contact with net-like structure 121 and captures the liquid droplets, such as a demister, a filter, or a mesh is used. Separating section 120 has a receiving section 122 with a funnel shape that receives a cooled condensed liquid L1 cooled by cooling section 110 and containing the organic solvent. Cooled condensed liquid L1 cooled by cooling section 110 and cooled condensed liquid L1 captured by net-like structure 121 flow into receiving section 122 due to the gravity, are then collected in a tank 125 arranged below receiving section 122, and are recovered as a recovered liquid L3.

Chamber 123 is a structure having a space with a specific capacity. A dam 124 is provided inside chamber 123. Dam 124 prevents a part of cooled condensed liquid L1 from moving to a distal end direction of chamber 123 and flowing into a first flow passage F1 as a cooling gas flow passage. Dam 124 works to reliably recover cooled condensed liquid L1. Cooling treatment gas G3 stored inside chamber 123 for a specific period of time flows as cooling treatment gas G21 (return gas G21) through a flow passage F21 and is returned to cooling section 110. A part of cooling treatment gas G3 flows as cooling treatment gas G22 through a flow passage F22 and is supplied to second concentration device 300.

Cooling section 110 is provided with second heat exchanger 112 that cools exhaust gas G1 through heat exchange between cooling gas G21 and exhaust gas G1 before first heat exchanger 111. In this manner, the heat transmission area and the amount of the refrigerant required by first heat exchanger 111 are reduced.

Organic solvent recovery system 1J has a structure in which exhaust gas G1 (exhaust gas G2, cooling treatment gas G3) flows in an L-shaped direction by a flowing direction from net-like structure 121 to chamber 123 inside separating section 120 intersecting a flowing direction from cooling section 110 to separating section 120 when seen along a direction in which exhaust gas G1 flows.

Since a location configured of cooling section 110 and separating section 120 has an L-shaped structure, organic solvent recovery system 1J can curb exposure of second concentration device 300 due to liquid droplets and splash. If second concentration device 300 are exposed and an adsorbent gets wet, degradation of strength or damage may occur. Organic solvent recovery system 1J can prevent degradation of strength and damage of second concentration device 300 by having the L-shaped structure.

Second concentration device 300 used in organic solvent recovery system 1K1 will be described. Second concentration device 300 has an adsorption element 310 including an adsorption material that adsorbs the contained organic solvent by gas coming into contact with the adsorption material and desorbs the adsorbed organic solvent by heated gas coming into contact with the adsorption material. Adsorption element 310 includes a desorption section (desorption zone) 311 and an adsorption section (adsorption zone) 312. In adsorption section 312, the organic solvent contained in cooling treatment gas G22 is adsorbed by the adsorption material, and cooling treatment gas G22 is cleaned and discharged as cleaned gas G9, by cooling treatment gas G22 being introduced and by cooling treatment gas G22 coming into contact with the adsorption material.

In desorption section 311, the organic solvent is desorbed from the adsorption material, and the gas is thereby discharged as desorption gas G11 containing the organic solvent, by high-temperature gas G10 at a higher temperature than cooling treatment gas G22 being introduced into the adsorption material.

As the adsorption material contained in adsorption element 310, activated alumina, silica gel, an activated carbon material, and zeolite have widely been used, and among these, activated carbon and hydrophobic zeolite have been particularly suitably used.

As illustrated in Fig. 17, second concentration device 300 includes a rotation shaft and adsorption element 310 provided around the rotation shaft. Second concentration device 300 has a configuration in which the adsorption material that has adsorbed the organic solvent in cooling treatment gas G22 introduced from flow passage F22 continuously moves to desorption section 311 in adsorption section 312 by causing adsorption element 310 to rotate about the rotation shaft.

As illustrated in Fig. 17, desorption section 311 is preferably arranged further downward than adsorption section 312 in second concentration device 300. This is because a desorbed condensed liquid L2 is unlikely to adhere to adsorption section 312 even in a case where a part of the organic solvent contained in desorption gas G11 is liquefied and condensed and desorbed condensed liquid L2 is generated. Desorbed condensed liquid L2 drops downward from desorption section 311, follows an inner surface of the exterior of the desorption section, and is recovered. More preferably, it is better to incline desorption section 311 downward to facilitate downward dropping of desorbed condensed liquid L2.

Second concentration device 300 may have a cleaning section (purge section) to which a part on which desorption processing has been completed in desorption section 311 is transferred before transfer to adsorption section 312. A configuration in which a part of cleaned gas G9 is introduced into the purge section and purge section outlet gas discharged from the purge section is introduced into adsorption section 312 may be employed. This is because it is possible to prevent desorption gas G11 remaining in the adsorption material from being mixed into cleaned gas G9 and to cool the adsorption material by cleaned gas G9 cleaning the adsorption material on which desorption has been completed.

High-temperature gas G10 used for the desorption is preferably obtained by bringing a part of cleaned gas G9 into a high-temperature state by using heating means such as a regeneration heater 350. This is because the amount of treatment air for the gas containing the organic solvent does not increase in adsorption section 312.

Organic solvent recovery system 1K2 in organic solvent recovery system 1J does not have second concentration device 300 unlike organic solvent recovery system 1K1. Therefore, all cooling treatment gas G3 stored in chamber 123 of cooling condensing device 100 for a specific period of time flows as cooling treatment gas G21 (return gas G21) through flow passage F21 and is returned to cooling section 110.

As illustrated in Fig. 17, organic solvent recovery system 1J according to embodiment 1J has a configuration in which plurality of cooling condensing devices 100 are arranged in parallel with respect to production facility 130 and the number of second concentration devices 300 in the later stage is less than the number of cooling condensing devices 100 in the earlier stage. Specifically, the number of second concentration devices 300 in the later stage is 1, while the number of cooling condensing devices 100 in the earlier stage is two. Note that the number of second concentration devices 300 may be any number as long as a configuration in which the number of second concentration devices 300 in the later stage is less than the number of cooling condensing devices 100 is employed. In this case, positions to which second concentration devices 300 in the later stage are connected may be any positions from among the plurality of cooling condensing devices 100 in the earlier stage.

### [Effects and advantages]

Organic solvent recovery system 1J according to the present embodiment includes cooling condensing devices 100 that liquefy and condense the organic solvent by cooling exhaust gas G1 containing the organic solvent and discharge exhaust gas G1 as cooling treatment gas G22 with reduced concentration of the organic solvent, flow passage F22 that causes cooling treatment gas G22 to pass therethrough, and second concentration device 300 that adsorbs, by adsorption element 310, the organic solvent contained in cooling treatment gas G22 introduced from flow passage F22, discharges cooling treatment gas G22 as cleaned gas G9 with further reduced concentration of the organic solvent, introduces high-temperature gas G10, desorbs the organic solvent from adsorption element 310, and discharges high-temperature gas G10 as desorption gas G11. The number of cooling condensing devices 100 provided is at least two or more, the number of second concentration devices 300 provided is at least one or more, and the number of second concentration devices 300 is less than the number of cooling condensing devices 100.

Therefore, it is possible to recover the organic solvent from exhaust gas G1 by the plurality of cooling condensing devices 100 with high efficiency even in a case where the flow amount of exhaust gas G1 discharged from production facility 130 is large.

The plurality of cooling condensing devices 100 according to the present embodiment are arranged in parallel with respect to production facility 130. In this manner, it is possible to recover the organic solvent from exhaust gas G1 with high efficiency in a case where the flow amount of exhaust gas G1 discharged from production facility 130 is large.

Cooling condensing device 100 according to the present embodiment further includes net-like structure 121 that separates the condensed organic solvent and cooling treatment gas G3 by bringing exhaust gas G2 after cooling into contact with net-like structure 121 and chamber 123 that stores cooling treatment gas G3 after passing through net-like structure 121 for a specific period of time. In this manner, it is possible to recover the organic solvent from exhaust gas G1 with high efficiency.

Cooling condensing device 100 according to the present embodiment further includes first heat exchanger 111 and second heat exchanger 112 that performs the cooling through heat exchange with the refrigerant. In this manner, it is possible to perform the heat exchange between the refrigerant and the exhaust gas.

In second concentration device 300 according to the present embodiment, adsorption element 310 is arranged at the adsorption rotor with the disc shape rotating about the cylinder shaft. In this manner, it is possible to recover the organic solvent with high efficiency.

### [Other embodiments]

In the above embodiment, organic solvent recovery system 1J may have a configuration obtained by deleting the concentration device in the earlier stage from the configurations of the organic recovery systems including two concentration devices illustrated in Figs. 2 to 13 or may be configured by a combination thereof.

Second concentration device 300 which is a concentration device of a disc type has been explained as an example of the concentration device used in organic solvent recovery system 1J. First concentration device 200 which is a concentration device of an upright cylinder type in which the plurality of adsorption units 210 are arranged in the circumferential direction around the cylinder shaft of the rotor with the hollow columnar shape rotating about the cylinder shaft may be used as second concentration device 300 in the later stage. Also, a concentration device of a sideways cylinder type may be used as the concentration device.

As the organic solvent contained in exhaust gas G1, an organic solvent that is liquefied though cooling at 1°C to 50°C and can be recovered is listed. Examples of the organic solvent include N-methyl-2-pyrrolidon, N-ethyl-2-pyrrolidon, N,N-dimethylformamide, N,N-dimethylacetamide, and n-decane. These are examples, and the organic solvent is not limited thereto. One kind or more kinds of the organic solvents may be contained.

The embodiments disclosed herein should be considered as illustrative examples in any sense and not as limitations. The scope of the present disclosure is indicated by the claims rather than the above description, and all modifications within the meanings and the scope equivalent to those of the claims are intended to be included in the scope of the present disclosure.

### REFERENCE SIGNS LIST

1A, 1B, 1C, 1D, 2B, 2C, 2D, 3C, 3D, 4C, 4D Organic solvent recovery system; 100 Cooling condensing device; 110 Cooling section; 111 First heat exchanger; 112 Second heat exchanger; 120 Separating section; 121 Net-like structure; 123 Chamber; 125 Tank; 127 Ceiling section; 128 Partitioning section; 130 Production facility; 200 First concentration device; 210 Adsorption unit; 211 Inner circumference-side flow path forming member; 212 Adsorption rotor; 213 Outer circumference-side flow path forming member; 250, 350 Regeneration heater; 300 Second concentration device; 310 Adsorption element; 311 Desorption section; 312 Adsorption section; F1 First flow passage; F2 Second flow passage; F3 Third flow passage; F4 Fourth flow passage; F5 Fifth flow passage; F6 Sixth flow passage; G1, G2 Exhaust gas; G3, G4, G5, G6 Cooling treatment gas; G7, G10 High-temperature gas; G8, G11 Desorption gas; G9 Cleaned gas; L1 Cooled condensed liquid; L2 Desorbed condensed liquid; L3 Recovered liquid

## Claims

1. An organic solvent recovery system that recovers an organic solvent from exhaust gas discharged from a production facility and containing the organic solvent, the organic solvent recovery system comprising:
cooling condensing devices that liquefy and condense the organic solvent by cooling the exhaust gas containing the organic solvent and discharge the exhaust gas as cooling treatment gas with reduced concentration of the organic solvent;
a first flow passage that causes the cooling treatment gas to pass therethrough;
first concentration devices that adsorb, by first adsorption elements, the organic solvent contained in the cooling treatment gas introduced from the first flow passage, discharge the cooling treatment gas as first treatment gas with further reduced concentration of the organic solvent, introduce high-temperature gas, desorb the organic solvent from the first adsorption elements, and discharge the high-temperature gas as first desorption gas;
a second flow passage that causes a part of the first treatment gas to pass therethrough;
a second concentration device that adsorbs, by a second adsorption element, the organic solvent contained in the first treatment gas introduced from the second flow passage, discharges the first treatment gas as second treatment gas with further reduced concentration of the organic solvent, introduces high-temperature gas, desorbs the organic solvent from the second adsorption element, and discharges the high-temperature gas as second desorption gas; and
a third flow passage that returns the first desorption gas and the second desorption gas to the cooling condensing devices,
wherein a number of the first concentration devices provided is at least two or more, and a number of the second concentration devices provided is at least one or more, and
the number of the second concentration devices is less than the number of the first concentration devices.

2. The organic solvent recovery system according to claim 1, wherein a plurality of first concentration devices are arranged in parallel with respect to the production facility.

3. The organic solvent recovery system according to claim 1 or 2,
wherein a number of the cooling condensing devices provided is at least two or more, and
the number of the first concentration devices is the same as the number of the cooling condensing devices.

4. The organic solvent recovery system according to claim 1 or 2, wherein the cooling condensing devices further include a net-like structure that separates the condensed organic solvent and the cooling treatment gas by bringing the exhaust gas after the cooling into contact with the net-like structure and a chamber that is caused to store the cooling treatment gas after passing through the net-like structure for a specific period of time.

5. The organic solvent recovery system according to claim 1 or 2, wherein the cooling condensing devices further include a heat exchanger that performs the cooling through heat exchange with a refrigerant.

6. The organic solvent recovery system according to claim 1 or 2, wherein in the first concentration devices, a plurality of the first adsorption elements are arranged in a circumferential direction around a cylinder shaft of a rotor with a hollow columnar shape rotating about the cylinder shaft.

7. The organic solvent recovery system according to claim 1 or 2, wherein in the second concentration device, the second adsorption element is arranged at an adsorption rotor with a disc shape rotating about a cylinder shaft thereof.

8. An organic solvent recovery system that recovers an organic solvent from exhaust gas discharged from a production facility and containing the organic solvent, the organic solvent recovery system comprising:
cooling condensing devices that liquefy and condense the organic solvent by cooling the exhaust gas containing the organic solvent and discharges the exhaust gas as cooling treatment gas with reduced concentration of the organic solvent;
a first flow passage that causes the cooling treatment gas to pass therethrough; and
a concentration device that adsorbs, by an adsorption element, the organic solvent contained in the cooling treatment gas introduced from the first flow passage, discharges the cooling treatment gas as first treatment gas with further reduced concentration of the organic solvent, introduces high-temperature gas, desorbs the organic solvent from the adsorption element, and discharges the high-temperature gas as desorption gas,
wherein a number of the cooling condensing devices provided is at least two or more, and a number of the concentration devices provided is at least one or more, and
the number of the concentration devices is less than the number of the cooling condensing devices.

9. The organic solvent recovery system according to claim 8, wherein a plurality of cooling condensing devices are arranged in parallel with respect to the production facility.

10. The organic solvent recovery system according to claim 8 or 9, wherein the cooling condensing devices further include a net-like structure that separates the condensed organic solvent and the cooling treatment gas by bringing the exhaust gas after the cooling into contact with the net-like structure and a chamber that is caused to store the cooling treatment gas after passing through the net-like structure for a specific period of time.

11. The organic solvent recovery system according to claim 8 or 9, wherein the cooling condensing devices further include a heat exchanger that performs the cooling through heat exchange with a refrigerant.

12. The organic solvent recovery system according to claim 8 or 9, wherein in the concentration device, the adsorption element is arranged at an adsorption rotor with a disc shape rotating about a cylinder shaft thereof.
